# EUROPEAN PATENT APPLICATION

(11) **EP 1 151 913 A1**
(43) Date of publication of application: **07.11.2001**
(21) Application number: 00909712.2
(22) Date of filing: 17.03.2000
(51) Int. Cl.: B62M 19/00, B62K 5/00, B62K 11/00, B60K 17/34, B60K 23/04

(54) **FRONT AND REAR WHEEL DRIVE TYPE VEHICLE**

(30) Priority: 08.11.1999 JP 31682299
(71) Applicant: YAMAHA HATSUDOKI KABUSHIKI KAISHA, Iwata-shi, Shizuoka 438-8501 (JP)
(72) Inventor: JANSSON, Lars, 194 27 Upplands Vasby (SE); GUSTAFSSON, Leif, 194 27 Upplands Vasby (SE); TRIGG, Robert V., Yamaha Motor Europe N.V., 1119 NC Schiphol-Majijk (NL); WAHLEN, Magnus, 194 27 Upplands Vasby (SE); ISHIBASHI, Tadakazu, Iwata-shi, Shizuoka 438-8501 (JP)
(74) Representative: Grünecker, Kinkeldey, Stockmair & Schwanhäusser Anwaltssozietät
(86) International application number: JP0001645
(87) International publication number: WO0134457

(57) **Abstract**

A front and rear wheel drive type vehicle, comprising a hydraulic pump (100) driven so that it is interlocked with a rear wheel, a front wheel driving hydraulic motor (101) which is connected to the hydraulic pump (100) and disposed near a front wheel (106), and pressuring means (102) connected between the hydraulic motor (101) and the hydraulic pump (100), wherein a closed circuit (103) is formed of the hydraulic pump (100), front wheel driving hydraulic motor (101), and pressuring means (102).

## Description

### Field of the Invention

This invention relates to a front and rear wheel drive type of vehicle run by propelling front and rear wheels.

### Technical Background

As the front and rear wheel drive type of vehicles such as motorcycles and small four wheeled vehicles for running on irregular terrain by producing drive force also on the front wheel, there have been those of a constitution in which the engine power is transmitted to the front wheel through a mechanical transmitting device of such types as a chain drive type and a shaft drive type. Of such a type of vehicles, most of the front and rear wheel drive type of motorcycles are constituted to transmit engine power to the front wheel through a first chain type of transmitting device extending from the engine to the front fork support portion and a second chain type of transmitting device extending from the driven portion of the first chain type of transmitting device along the front fork to the front wheel hub.

The small-sized, four-wheeled vehicle of the front and rear wheel drive type for running on irregular land surfaces employs a constitution in which the engine power is transmitted through shaft drive type of transmitting devices to the front and rear wheels, with the rear wheel drive system comprising the shaft drive type of transmitting device extending from the engine toward the rear for driving the rear wheels on a single wheel shaft directly interconnecting right and left rear wheels, extending in the vehicle width direction, and connected to the rear part of the shaft drive type of transmitting device. The front wheel drive system of this vehicle is slightly different from the rear wheel drive system; comprising a shaft drive type of transmitting device, for the front wheels, extending from the engine toward the front of the vehicle body, wheel shafts for right and left front wheels connected through differential gears to the front end part of the shaft drive type of transmitting device, etc. The differential gear portion is provided with a differential lock mechanism for the direct interconnection between the right and left front wheels so that the vehicle can get out of the mud when one of the front wheels spins in the mud.

The small-sized, four-wheeled vehicle of the front and rear wheel drive type for running on irregular land surfaces is also provided with a 2WD-4WD switching device interposed between the engine and a shaft drive type of transmitting device located on the front wheel side for switching between a running mode with the engine power transmitted to only the rear wheels (2WD mode) and a running mode with the engine power transmitted to both of the front and rear wheels (4WD mode). It is arranged that propelling forces are produced on only the rear wheels by switching the switching device to the 2WD mode and that propelling forces are produced on both the front and rear wheels by switching the switching device to the 4WD mode.

The conventional front and rear wheel drive type of vehicle constituted as described above has problems: Since the vehicle is provided with transmitting members such as chains and drive shafts extending in the longitudinal and vertical directions of the vehicle body, the size of the vehicle body increases and the degree of freedom decreases in designing the front suspension system and other vehicle body components. Moreover, in the above-described transmitting devices, a large number of rotating members are required and their constitution is complicated.

Another problem is that, in the running mode with the drive force transmitted to the front wheels (4WD mode), the engine power is always transmitted to the front wheels and so the steering force for operating the steering wheel is always heavy. To reduce the steering force as much as possible, it is conceivable that the engine power is normally transmitted to the rear wheels only and switched to be transmitted to both the front and rear wheels when the vehicle is going to run on a slippery or muddy road, or when the rear wheels start spinning while running through the mud. However, there is also a problem: if such a switching operation is made manually, the operation is inevitably delayed and it is impossible to run the vehicle by driving the front and rear wheels at a required moment. Moreover, since the switching device is mechanically connected and disconnected, the switching operation lacks smoothness, and shocks are felt at the switching moment.

The inventors are contemplating solving all the above problems by a single contrivance by employing a constitution of driving the front wheels with hydraulic motors. As the front and rear wheel drive type of vehicle with the front wheel driven with a hydraulic motor, there is a motorcycle for example disclosed in a published Japanese patent application Tokkai Hei 1-273782. The front and rear wheel drive type of motorcycle shown in the published patent application is constituted with a hydraulic motor installed in the front wheel hub portion to which is supplied working oil with an engine-driven hydraulic pump. To supply the working oil from the hydraulic pump to the hydraulic motor, a hydraulic hose is used so that the hydraulic hose is bent when the steering operation is made. The hydraulic pump is connected through a transmitting device to the output shaft of the engine, so that the engine power is transmitted to the hydraulic pump as well as to the rear wheel.

The hydraulic circuit of the front and rear wheel drive type of motorcycle includes a reservoir for storing working oil on the upstream side of the hydraulic pump and an oil filter, both located in the vicinity of the hydraulic pump. To transmit power from the hydraulic motor to the hub, a gear is provided on the output shaft of the hydraulic motor, which gear is made to engage with another gear of the front wheel hub.

However, even if the above-described constitution is employed to drive the front wheel with the hydraulic motor, there is a limit to reduce the size of the vehicle body: Because the reservoir must be of a large volume to prevent cavitation from occurring on the suction side of the hydraulic pump when the revolution of the hydraulic pump suddenly increases as when the rear wheel slips. That is, because the large reservoir occupies a large space, body size cannot be reduced. The large reservoir causes additional problem of increased weight.

There are also problems related to assembly and maintenance; Components of the hydraulic system are mounted on the vehicle body one by one and they are interconnected through pipes and hoses. Therefore the number of brackets for attaching those components is also great and the assembly work is complicated and inefficient. At the time of maintenance, a large number of components must be removed and reattached.

Another problem is that, since connecting portion (engagement portion) between the hydraulic motor and the front wheel is exposed, this portion is liable to wear and abrasion due to dirt and foreign matter adhering to that portion. This problem can be solved to some extent for example by positioning the engagement portion within the hub, as disclosed in a published Japanese patent application Tokkai Hei 9-156570.

In the front and rear wheel drive type of vehicle disclosed in the above patent publication, part of the hydraulic motor is disposed to face the interior of the hub and the both components are made to engage with each other through gears within the hub. A wheel shaft is passed through a boss formed in the axially central portion of the hub. Both of the vehicle width direction ends of the boss are supported with bearings for rotation about the wheel shaft. One end of the boss is extended radially outward. The outside circumferential portion of the extended portion is formed in a cylindrical shape having a flange for connecting spokes. The cylindrical portion is formed to be open on one side of the vehicle body, with an internal gear attached to the bottom of the cylindrical recess.

The hydraulic motor is supported on a disk-shaped cover secured on the wheel shaft side, with its output gear made to engage with the internal gear within the cylindrical recess. The cover is shaped to close the cylindrical recess of the hub and located immediately inside the opening brim of the cylindrical portion. A seal member is interposed between the outside circumferential surface of the cover and the opening brim to prevent foreign matter such as muddy water, sand, grit, etc. from entering the inside of the hub.

However, there is a problem; Since the seal member interposed between the disk-shaped cover supporting the hydraulic motor and the hub is located on the outermost side of the hub, it is likely to be hit and damaged with stones tossed up with the front wheel or projections on the road. Another problem is that the seal member is likely to wear as it is directly sprayed with muddy water. If the sealing function becomes poor, engagement portions of the hydraulic motor and the hub are worn with the muddy water entering the inside of the hub. Although this problem can be solved by providing a member for protecting the seal member, such a constitution would increase the size of the hub.

### Disclosure of the Invention

To solve the above-described problems, a front and rear wheel drive type of vehicle of this invention comprises; a hydraulic pump driven as interlocked with the rear wheel, a hydraulic motor for driving the front wheel and disposed in the vicinity of the hydraulic pump, and a pressurizing means interconnecting the front wheel-driving hydraulic motor and the hydraulic pump; with the hydraulic pump, the front wheel-driving hydraulic motor, and the pressurizing means constituting a closed circuit.

According to the invention, since the pressurizing means pressurizes the working oil, cavitation does not occur even if the revolution of the hydraulic pump increases rapidly. Therefore, cavitation is prevent from occurring without providing a large reservoir for storing working oil.

A front and rear wheel drive type of vehicle of claim 2 is based on the same of claim 1 wherein a pressurizing means is interposed between the suction side of the hydraulic pump and the discharge side of the hydraulic motor.

According to the invention, it is possible to pressurize the working oil on the low pressure side of the closed circuit.

A front and rear wheel drive type of vehicle of claim 3 is based on the same of claim 1 wherein the pressurizing means is interposed between the delivery side of the hydraulic pump and the suction side of the hydraulic motor.

According to the invention, the constitution of the hydraulic circuit need not be changed whether the vehicle runs forward or reverse.

A front and rear wheel drive type of vehicle of claim 4 is based on the same of claim 1 wherein the engine is used as the power source for the hydraulic pump.

According to the invention, a front and rear wheel drive type of vehicle can be easily produced by retrofitting the front wheel drive system components to an existing vehicle.

A front and rear wheel drive type of vehicle of claim 5 is based on the same of claim 1 wherein an electric motor is used as the power source for the hydraulic pump.

According to the invention, since the front wheel can be driven by driving the hydraulic pump with the electric motor, variation in the hydraulic pressure can be held small and cavitation is less likely to occur.

A front and rear wheel drive type of vehicle of claim 6 is based on the same of claim 1 wherein the hydraulic motor is constituted to. be. supplied with hydraulic pressure so that the hydraulic motor rotates synchronously with the front wheel in the running state of the front wheel rotating at a nearly equal rotary speed as that of the rear wheel.

According to the invention, drive force is not produced on the front wheel when the front and rear wheels are rotating at nearly equal rotary speeds even if the hydraulic motor is rotated with hydraulic pressure, and drive force is produced upon decrease in the drive force of the rear wheel as when the rear wheel spins.

A front and rear wheel drive type of vehicle of claim 7 is based on the same of claim 1 wherein the hydraulic motor is constituted to be supplied with hydraulic pressure so that a drive force smaller than that on the rear wheel is produced on the front wheel in the running state of the front wheel rotating at a nearly equal rotary speed as that of the rear wheel.

According to the invention, a very small drive force is produced on the front wheel when the front and rear wheels are rotating at nearly equal rotary speeds and the drive force on the front wheel increases when the drive force of the rear wheel lowers as when the rear wheel spins.

A front and rear wheel drive type of vehicle of claim 8 is based on the same of claim 1 wherein a run mode switching means is provided for switching between a run mode of running with the rear wheel only driven and a run mode of both the front and rear wheels driven.

According to the invention, all the power can be transmitted to the rear wheel by choosing the run mode of producing the drive force on the rear wheel only when running on a paved road or the like.

A front and rear wheel drive type of vehicle of claim 9 is based on the same of claim 1 wherein a bladder made in a bag shape of rubber and filled with a high pressure gas is installed to a housing constituting part of the working oil passage to constitute a pressurizing means.

According to the invention, since the pressurizing means can be constituted with two components, the bladder and the housing, the constitution of the pressurizing means is simple.

A front and rear wheel drive type of vehicle of claim 10 is based on the same of claim 1 wherein the pressurizing means is formed with a cylinder in which a high pressure gas chamber and a working oil chamber are defined with a free piston.

According to the invention, since the cylinder and the piston can be made of metal, the degree of freedom in setting the pressure is increased in comparison with the constitution using the bladder.

A front and rear wheel drive type of vehicle of claim 11 is based on the same of claim 1 wherein the hydraulic circuit is constituted with; a pump unit having a hydraulic pump, a motor unit having a hydraulic motor, a hydraulic unit having a pressurizing means, an oil filter, and valves, with the oil filter attached to the housing of the hydraulic unit to form a single body, and with the valves attached to at least one of the three units to form a single body.

According to the invention, relatively small auxiliary components of the front wheel drive system such as the oil filter and the valves and relatively large components such as the hydraulic pump, hydraulic motor, and hydraulic unit can be made into units and mounted on the vehicle body. Therefore, it is possible to install all the components of the front wheel drive system in the vehicle body by mounting the three units, the pump unit, motor unit, and hydraulic unit on the vehicle body and interconnecting the units through piping.

A front and rear wheel drive type of vehicle of claim 12 is based on the same of claim 9 wherein the oil filter and the pressurizing means are placed side by side close to and longitudinally parallel to each other in the housing of the hydraulic unit, with a working oil inlet and a working oil outlet provided on the longitudinal end of the housing.

According to the invention, since piping can be laid parallel to the longitudinal direction of the hydraulic unit housing, the piping does not protrude extremely from the housing.

A front and rear wheel drive type of vehicle of claim 13 is based on the same of claim 12 wherein the working oil inlet and the working oil outlet are disposed on the end side of the oil filter, and a relief valve is disposed on the end side of the pressurizing means.

According to the invention, the piping and the relief valve can be interconnected utilizing a wide side wall formed on the longitudinal end of the housing in which relatively large-sized oil filter and pressurizing means are housed.

A front and rear wheel drive type of vehicle of claim 14 is based on the same of claim 1 wherein, the front wheel hub is formed in the shape of a bottomed cylinder having a cylindrical portion and a bottom portion so that the hub is formed with a cylindrical recess which is open to one side, the bottom portion is supported for rotation on a wheel shaft through a bearing, a disk-shaped cover for closing the cylindrical recess is secured to the wheel shaft, a hydraulic motor for driving the front wheel is supported with the cover and the output shaft of the hydraulic motor engages through gears with the hub within the cylindrical recess closed with the cover, the outside circumferential portion of the cover is positioned in the boundary portion between the cylindrical portion and the bottom portion, a labyrinth seal is formed between the outside circumferential portion of the cover and the cylindrical portion, and a seal member is interposed in a position between the outside circumferential portion of the cover and the hub and nearer to the bottom portion than the labyrinth seal.

According to the invention, since the seal member is in the deepest position from one side to the other of the hub, small stones and projections on the road do not directly strike the seal member. Moreover, since the labyrinth seal is formed outside the seal member, even if muddy water enters the cylindrical recess of the hub, the seal member is sealed with the labyrinth seal. Furthermore, since the seal member and the labyrinth seal are located in the deep position, and the end of the hub in the axial direction does not project sideways, the hub is made compact in the vehicle width direction.

A front and rear wheel drive type of vehicle of claim 15 is based on the same of claim 14 wherein the gear engagement portion of the hydraulic motor and the hub is located close to the cover.

According to the invention, since the hydraulic motor can be supported near the gear engagement portion, the hydraulic motor can be supported firmly.

A front and rear wheel drive type of vehicle of claim 16 is based on the same of claim 14 wherein the bearing for supporting the hub is constituted as a double row rolling bearing.

According to the invention, work of installing the hub on the wheel shaft becomes simple. Also, the boss of the hub through which the wheel shaft passes is made relatively short and so the weight of the hub is reduced.

A front and rear wheel drive type of vehicle of claim 17 is based on the same of claim 1 wherein two, right and left front wheels are provided, each provided with a hydraulic motor for driving each wheel independently.

According to the invention, unlike the conventional front and rear wheel drive type of four-wheeled vehicle, drive shafts for driving the front wheels and a differential are unnecessary. Moreover, since each right or left front wheel is driven independently with each hydraulic motor, a differential-lock state can be easily established, making a complicated differential lock mechanism unnecessary.

A front and rear wheel drive type of vehicle of claim 18 is based on the same of claim 17 wherein a hydraulic pump set comprises a hydraulic pump for driving the hydraulic motor for the left front wheel and a hydraulic pump for driving the hydraulic motor for the right front wheel, and working oil supply passages for supplying working oil from those hydraulic pumps to the respective hydraulic motors are provided independently on right and left sides.

According to the invention, the front wheels on the right and left sides of the vehicle body are driven with hydraulic pressures respectively of separate hydraulic pumps.

A front and rear wheel drive type of vehicle of claim 19 is based on the same of claim 17 wherein a single hydraulic pump is employed and a flow rate equally dividing means is interposed in the middle position on the working oil passage for supplying working oil from the hydraulic motor to hydraulic motors for the right and left front wheels.

According to the invention, since the single hydraulic pump can drive both of the right and left front wheels, the number of components is reduced, and a differential-lock state is easily established.

A front and rear wheel drive type of vehicle of claim 20 is based on the same of claim 17 wherein working oil is returned from the hydraulic motors for the right and left front wheels through working oil recovery circuits to the hydraulic pumps, with part of the working oil recovery circuits is made for use in common for right and left, and with the common part provided with hydraulic auxiliary devices for use in common.

According to the invention, the hydraulic auxiliary device can be used in common for right and left sides while employing the constitution of driving the right and left front wheels with hydraulic pressure.

A front and rear wheel drive type of vehicle of claim 21 is based on the same of claim 17 wherein an opening-closing valve for differential lock is provided for independently operating the hydraulic motors for the right and left front wheels.

According to the invention, with the differential lock opening-closing valve, the hydraulic motors for the right and left front wheels may be independently operated. This makes it possible, even in case one front wheel spins in the mud or the like, to continue running with the drive force of the other front wheel.

A front and rear wheel drive type of vehicle of claim 22 is based on the same of claim 1 wherein the engine power is transmitted through a mechanical transmitting means to the rear wheel to be driven.

A front and rear wheel drive type of four-wheeled vehicle of the invention may be realized by replacing only the structure of the front wheel drive system of conventional front and rear wheel drive type of vehicle or conventional small-sized four-wheeled vehicle with the structure of the hydraulic motor-driven type.

### Brief Description of Figures

FIG. 1 roughly shows a constitution of a front and rear wheel drive type of vehicle of this invention.
FIG. 2 shows a constitution of a hydraulic circuit of the first embodiment.
FIG. 3 is a rough left side view of the front and rear wheel drive type of motorcycle of the first embodiment.
FIG. 4 is a rough right side view of the front and rear wheel drive type of motorcycle of the first embodiment.
FIG. 5 is a rough front view of the front and rear wheel drive type of motorcycle of the first embodiment.
FIG. 6 is a rough rear view of the front and rear wheel drive type of motorcycle of the first embodiment.
FIG. 7 is a cross-sectional view of a hydraulic unit interposed in the hydraulic system of the first embodiment.
FIG. 8-A is a cross-sectional view in the fully closed state of an opening-closing valve for hydraulic control of the first embodiment.
FIG. 8-B is a cross-sectional view in the fully open state of the opening-closing valve for hydraulic control of the first embodiment.
FIG. 9 is a front view of the hydraulic unit of the first embodiment.
FIG. 10 is a rough cross-sectional view of the front wheel hub of the first embodiment.
FIG. 11 is a cross-sectional view of the front hub of the first embodiment.
FIG. 12 is an enlarged cross-sectional view of an essential part of the hub of the first embodiment.
FIG. 13 is a cross-sectional view of the front hub of the second embodiment.
FIG. 14 is a left side view of the front and rear wheel drive type of motorcycle of the second embodiment.
FIG. 15 is a right side view of the front and rear wheel drive type of motorcycle of the second embodiment.
FIG. 16 is a cross-sectional view of the hydraulic unit of the second embodiment.
FIG. 17 is a constitution diagram of a hydraulic circuit of the third embodiment.
FIG. 18 is a cross-sectional view of an example of mounting a hydraulic pump of the third embodiment.
FIG. 19 is a cross-sectional view of an example of mounting a hydraulic pump of the third embodiment.
FIG. 20 is a constitution diagram of a hydraulic circuit of the fourth embodiment.
FIG. 21 is a rough oblique view of a small four-wheeled vehicle for running on irregular terrain of the fourth embodiment.
FIG. 22 is an oblique view showing the constitution of the front wheel drive system of the fourth embodiment.
FIG. 23 is a diagram of the hydraulic circuit of the front wheel drive system of the fourth embodiment, in the state of forward run with the differential locked.
FIG. 24 is the diagram of the hydraulic circuit of the front wheel drive system of the fourth embodiment, in the state of forward run with the differential unlocked.
FIG. 25 is the diagram of the hydraulic circuit of the front wheel drive system of the fourth embodiment, in the state of being shifted from the forward run state to the reverse run state.
FIG. 26 is the diagram of the hydraulic circuit of the front wheel drive system of the fourth embodiment, in the state of reverse run with the differential locked.
FIG. 27 is the diagram of the hydraulic circuit of the front wheel drive system of the fourth embodiment, in the state of reverse run with the differential unlocked.
FIG. 28 is the diagram of the hydraulic circuit of the front wheel drive system of the fourth embodiment, in the state of forward run with only the rear wheels driven.
FIG. 29 is the diagram of the hydraulic circuit of the front wheel drive system of the fourth embodiment, in the state of reverse run with only the rear wheels driven.
FIG. 30A is a cross-sectional view for explaining the operation of a spool valve of the fourth embodiment, in the forward run state.
FIG. 30B is a cross-sectional view for explaining the operation of the spool valve of the fourth embodiment, in the state between forward run and reverse run.
FIG. 30C is a cross-sectional view for explaining the operation of the spool valve of the fourth embodiment, in the reverse run state.
FIG. 31 is the constitution diagram of the hydraulic circuit of the fifth embodiment.
FIG. 32 is the hydraulic circuit diagram of the fifth embodiment, in the forward run state with the differential locked.
FIG. 33 is the hydraulic circuit diagram of the fifth embodiment, in the forward run state with the differential unlocked.
FIG. 34 is the hydraulic circuit diagram of the fifth embodiment, in the reverse run state with the differential locked.
FIG. 35 is the hydraulic circuit diagram of the fifth embodiment, in the reverse run state with the differential unlocked.
FIG. 36 shows a hydraulic circuit of the fifth embodiment, in the forward run state with only the rear wheels driven.
FIG. 37 shows a hydraulic circuit of the fifth embodiment, in the reverse run state with only the rear wheels driven.

### The Best Form of Embodying the Invention

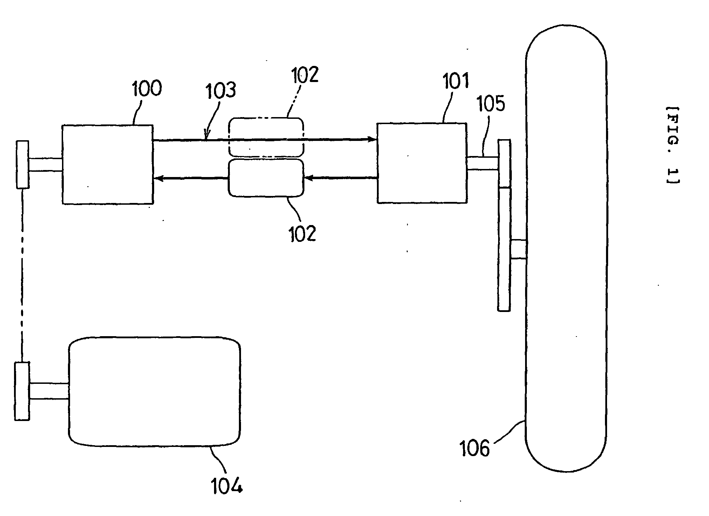

The constitution of the front and rear wheel drive type of vehicle of this invention will be described in reference to FIG. 1.

The front and rear wheel drive type of vehicle of this invention comprises; a hydraulic pump 100, a hydraulic motor 101 connected to the hydraulic pump 100, and a pressurizing means 102 interconnecting the hydraulic pump 100 and the hydraulic motor 101, with the three components constituting a closed circuit 103.

The hydraulic pump 100 is constituted to be driven with a power source 104 mounted on a vehicle body (not shown) and to rotate synchronously with a rear wheel (not shown). The power source 104 is an engine or an electric motor mounted on the vehicle body. Incidentally, the concept of the front and rear wheel drive type of vehicle of this invention includes motorcycles, motor-tricycles, and small-sized four-wheeled vehicles.

As working oil under pressure is supplied from the hydraulic pump 100 to the hydraulic motor 101, its output shaft 105 rotates to drive the front wheel 106 gear-connected to the output shaft 105. The pressurizing means 102 is for raising the hydraulic pressure in the closed circuit 103 and is interposed between the suction side of the hydraulic pump 100 and the discharge side of the hydraulic motor 101. The pressurizing means 102 may be alternatively interposed between the delivery side of the hydraulic pump 100 and the suction side of the hydraulic motor 101 as shown with the phantom line in FIG. 1.

Interposing the pressurizing means 102 in the closed circuit 103 to pressurize working oil as described above prevents cavitation from occurring even if the revolution of the hydraulic pump 100 increases rapidly. That is, cavitation is prevented without providing a large reservoir for storing working oil.

Embodiments of the front and rear wheel drive type of vehicle of this invention will be hereinafter described in reference to appended drawings. Examples of applying this invention to the motorcycle are described by means of the first to the third embodiments, and examples of applying this invention to the small-sized four-wheeled vehicle are explained by means of the fourth and fifth embodiments.

### First Embodiment

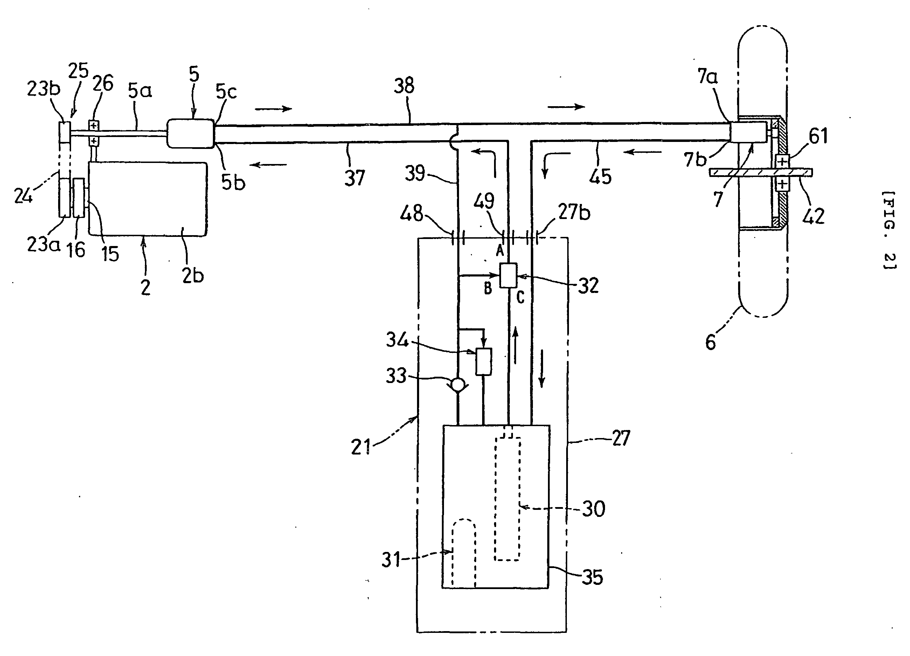

An embodiment of this invention as applied to the motorcycle is described in detail in reference to FIGs. 2 to 12.

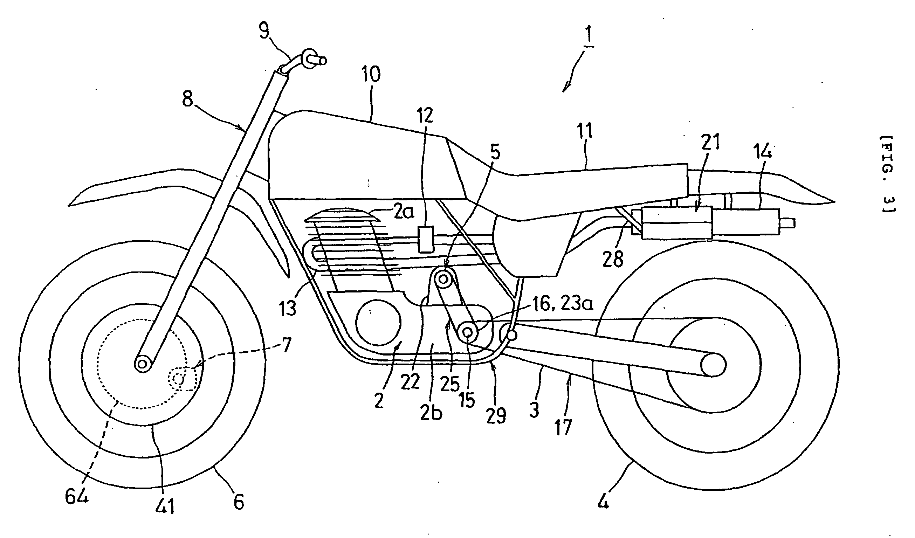

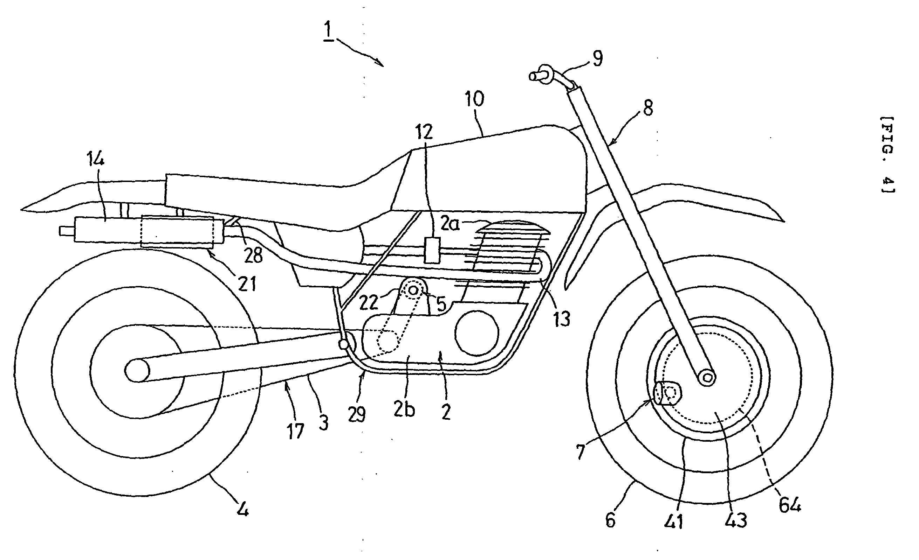

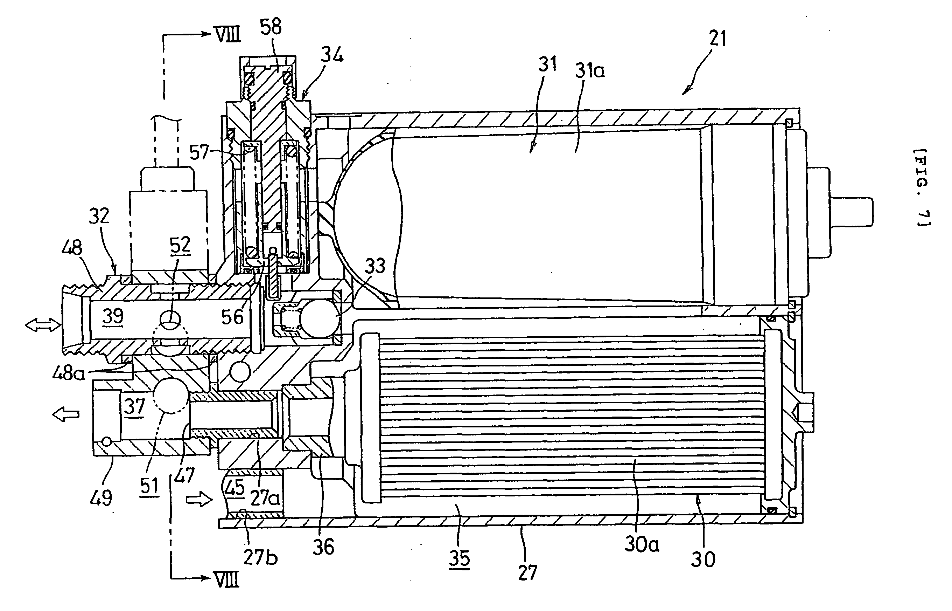

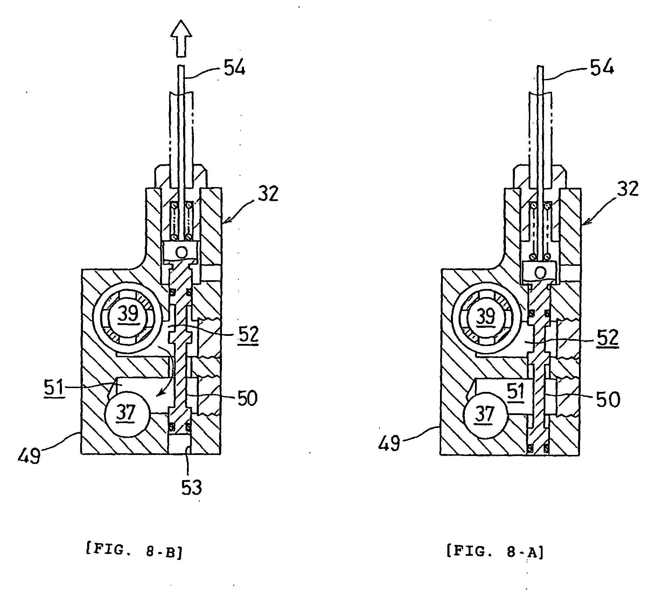

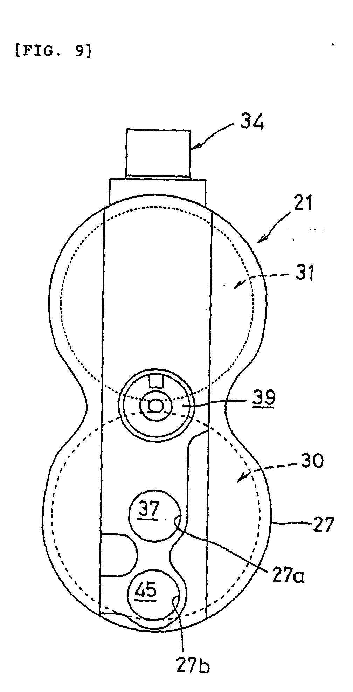

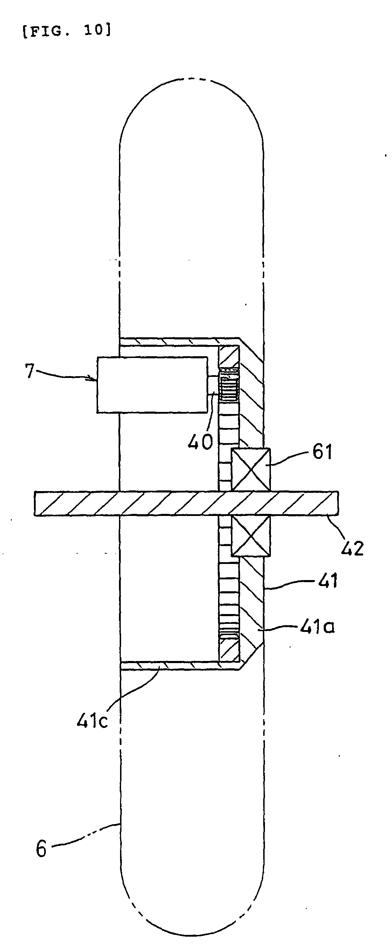

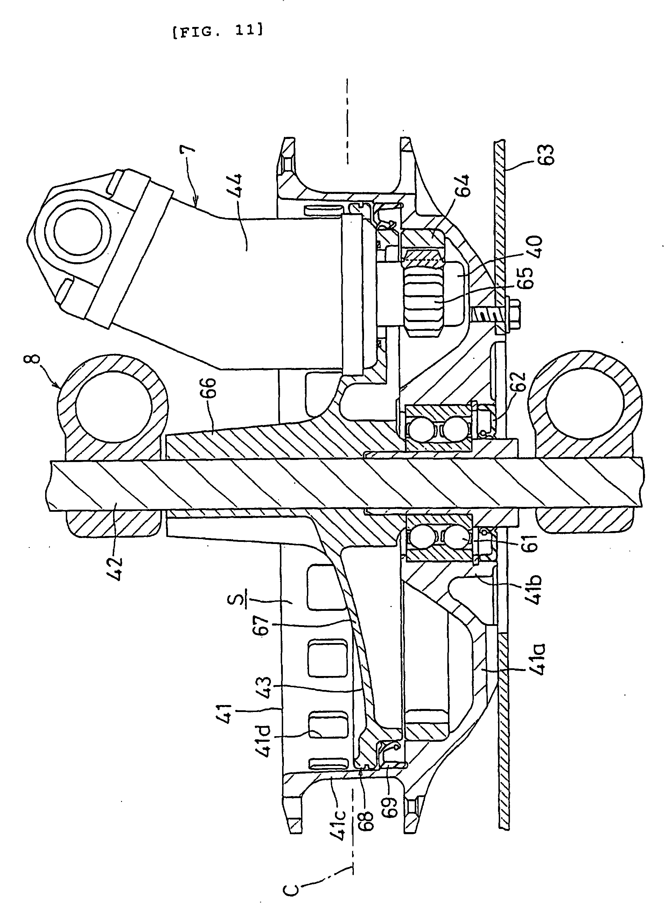

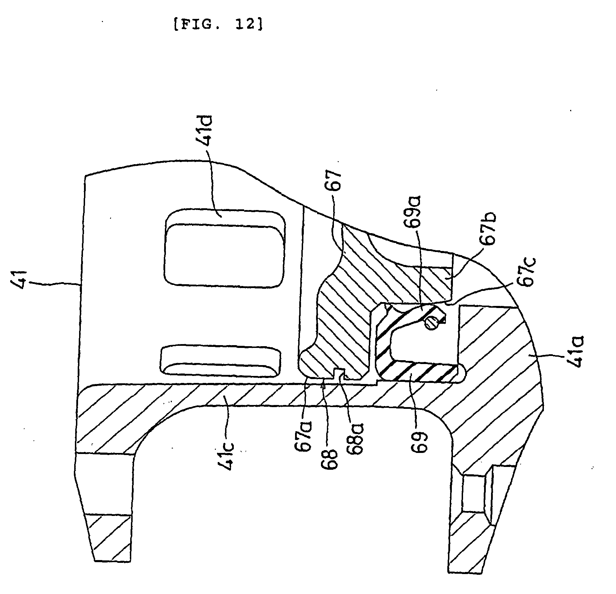

FIG. 2 shows a constitution of a hydraulic circuit. FIG. 3 is a rough left side view of the front and rear wheel drive type of motorcycle. FIGs. 4, 5, and 6 are right side, front, and rear views, respectively, of the same motorcycle. FIG. 7 is a cross-sectional view of a hydraulic unit interposed in the hydraulic system. FIG. 8 shows the section VIII-VIII of the hydraulic control opening-closing valve in FIG. 7, with FIG. 8-A showing the fully closed state, and with FIG. 8-B showing the fully open state. FIG. 9 is a front view of the hydraulic unit. FIG. 10 is a rough cross-sectional view of the front wheel hub. FIG. 11 is a cross-sectional view of the front hub. FIG. 12 is an enlarged cross-sectional view of an essential part of the hub.

As shown in FIG. 2, the front and rear wheel drive type of motorcycle of this embodiment comprises; a hydraulic pump 5, a hydraulic motor 7 for driving the front wheel and connected to the delivery side of the hydraulic pump 5, and a pressurizing means 31 interconnecting the discharge side of the hydraulic motor 7 and the suction side of the hydraulic pump 5, with the hydraulic pump 5, the hydraulic motor 7 for driving the front wheel, and the pressurizing means 31 constituting a closed circuit. Incidentally, although not shown, the pressurizing means 31 may be interposed between the working oil delivery port 5c of the hydraulic pump 5 and the working oil inlet 7a of the hydraulic motor 7.

The hydraulic pump 5 is constituted to be driven with an engine 2. The hydraulic motor 7 is disposed in the hub portion of the front wheel 6. The pressurizing means 31 is constituted to pressurize working oil in the (closed) hydraulic circuit.

Further details of the front and rear wheel drive type of motorcycle comprising the above-mentioned components will be described below.

As shown in FIGs. 2 to 12, the front and rear wheel drive type of motorcycle of this embodiment is provided with the symbol 1. The front and rear wheel drive type of motorcycle 1 is constituted as follows: The power of the engine 2 is transmitted through a chain 3 to the rear wheel 4. At the same time, hydraulic pressure is applied to the hydraulic motor 7 of the front wheel 6 by means of the engine-driven type of hydraulic pump 5, and the hydraulic motor 7 drives the front wheel 6.

In the figures are shown; a front fork 8 of a known telescopic type for supporting the front wheel 6, steering handlebars 9, a fuel tank 10, and a seat 11. The engine 2 in this embodiment is of a four-stroke cycle, single-cylinder type, with a carburetor 12 connected to the vehicle body rear side of the cylinder head 2a, and with a an exhaust pipe 13 connected to the vehicle body front side of the cylinder head 2a. The exhaust pipe 13 is formed to extend rearward along the right side of the vehicle body and its rear end is connected to a muffler 14.

The rear wheel drive system of the motorcycle 1 is constituted in the known manner, with an output shaft 15 projecting out of the crankcase 2b and connected to the rear wheel 4 through a power transmitting means 17 including a sprocket 16 and the chain 3.

The front wheel drive system is constituted as shown in FIG. 2 with the hydraulic pump 5 on the engine side, a hydraulic unit 21 for controlling hydraulic pressure, the hydraulic motor 7, etc. Those hydraulic components are interposed in a closed hydraulic circuit made up of hydraulic passages.

The hydraulic pump 5, as shown in FIGs. 3 and 4, is supported on the crankcase 2b through a bracket 22. The input shaft 5a (FIG. 2) of the hydraulic pump 5 is connected to the engine output shaft 15 through a power transmitting means 25, for the front wheel, made up of sprockets 23a, 23b, and a chain 24. The sprocket 23a on the engine output shaft 15 of the power transmitting means 25 for the front wheel is positioned outer side of the vehicle body than the sprocket 16 of the power transmitting means 17 for the rear wheel.

In this way, as the hydraulic pump 5 is connected through the power transmitting means 25 for the front wheel to the engine output shaft 15, the input shaft 5a of the hydraulic pump 5 rotates synchronously with the rear wheel 4. In this embodiment, a constitution is employed in which the hydraulic pump 5 is disposed and supported (not shown) at the vehicle body right side end of the crankcase 2b to balance the weight of the power transmitting means 25 for the front wheel located on the vehicle body left side. In this constitution, the input shaft 5a extends from one end in the vehicle width direction above the crankcase 2b to the other end and is rotatably supported through a bearing 26 on a bracket 22 secured to the crankcase 2b. Incidentally, the power transmitting means 25 for the front wheel may be of a belt-drive type.

The hydraulic unit 21 is constituted, as shown in FIGs. 2 to 9, as a single unit by attaching plural members to a single housing 27, and as shown in FIGs. 3, 4, and 6, disposed on the opposite side in the vehicle width direction of the muffler 14, and supported through a stay 28 (FIGs. 3 and 4) on the vehicle body frame 29. In this embodiment, the hydraulic unit 21 is disposed so that the hydraulic unit 21 and the muffler 14 are superimposed as seen in side view. Incidentally, the hydraulic unit 21 and the muffler 14 are located above the rear wheel 4 as seen in the side direction.

The plural members to be attached to the hydraulic unit 21 are as shown in FIGs. 2 and 7, an oil filter 30, an expansion type of pressurizing means 31, an operation switching valve 32, a check valve 33, and a relief valve 34.

The housing 27 for attaching these members is formed as shown in FIG. 7 elongate in the right-left directions in the figure, with its interior constituting a working oil chamber 35.

The oil filter 30 is installed in the lower part of the housing 27 and a pressurizing means 31 is installed in the upper part of the housing 27. In one longitudinal (axial direction of the oil filter 30 and the pressurizing means 31) end part of the housing 27 are installed the operation switching valve 32, check valve 33, and relief valve 34. The oil filter 30 and the pressurizing means 31 are placed close to each other, one over the other, with their axial lines parallel to each other. The working oil chamber 35 is constituted with the part for installing the oil filter 3 and the part for installing the pressuring means 31 being in mutual communication, so that pressure caused with the pressurizing means 31 is propagated throughout the interior of the working oil chamber 35.

The oil filter 30 is constituted to filter foreign matter as the working oil flows from outside to the axially central portion of the filter element 30a. The oil filter 30 is supported with the housing 27 at two positions, at an oil outflow pipe 36 provided on one axial end of axially central portion and at the other end. The oil outflow pipe 36 is connected to the working oil outlet 27a (FIG. 7) of the housing 27.

The pressurizing means 31 is made as a bladder 31a in a bag shape of rubber filled with air or inert gas under pressure, with its right hand end in FIG. 7 secured to the housing 27. The working oil in the hydraulic circuit of this embodiment is pressurized to about five (5) atm. Pressurizing in this way is for preventing cavitation from occurring due to decrease in suction side hydraulic pressure when the revolution of the hydraulic pump 5 increases extremely. Constituting the pressurizing means 31 with the two components, the bladder 31a and the housing 27, as shown in this embodiment, simplifies its constitution. Incidentally, the pressurizing means 31 is not limited to the bladder (gas bag) type as shown here but may be of any other type, for example a gas piston type with one side of a free piston facing working oil while the other side facing a high pressure gas chamber to pressurize the working oil. In case the gas piston type of constitution is employed, the pressurizing means 31 is made up of a cylinder in which a high pressure gas chamber and a working oil chamber are defined with a free piston. When this constitution is employed, since the cylinder and the free piston may be made of metal, a higher degree of freedom can be provided in setting the pressure in comparison with the constitution employing the bladder 31a.

Here, the constitution of the hydraulic circuit of the front wheel drive system will be described in reference to FIG. 2.

The hydraulic pump 5 for supplying hydraulic pressure to the hydraulic circuit is of the axial plunger type, known as the so-called swash-plate pump, with the working oil outlet 27a of the hydraulic unit 21 connected to the working oil suction port 5b through the first working oil return passage 37. The operation switching valve 32 is interposed in the middle of the first working oil return passage 37.

The working oil delivery port 5c of the hydraulic pump 5 is connected to the working oil inlet 7a of the hydraulic motor 7 through a working oil supply passage 38 made up of a flexible hydraulic hose, etc. The middle part of the working oil supply passage 38 is connected through a bypass passage 39 to the hydraulic unit 21.

The hydraulic motor 7 is of the axial plunger type, known as the so-called swash-plate motor. As shown in FIGs. 10 to 12, the output shaft 40 of the hydraulic motor 7 projects from its one end, and engages through gears with a hub 41 (to be described later) of the front wheel 6. The hydraulic motor 7 is supported on a disk-shaped covers 43 secured to the wheel shaft 42 of the front wheel 6. When hydraulic pressure is supplied to the hydraulic motor 7 and its output shaft 40 is rotated, the rotation is transmitted through the gear engagement to the hub 41, so that the front wheel 6 is propelled.

This embodiment is constituted that, when the front and rear wheels are rotating about the same revolution, the hydraulic motor 7 rotates synchronously with the front wheel 6 in the state of hydraulic pressure being supplied. That is to say, when the revolutions of the front and rear wheels are about the same each other, driving force is not produced on the front wheel even if the hydraulic motor 7 is rotated with the hydraulic pressure.

As shown in FIG. 11, the housing 44 of the hydraulic motor 7 is shaped to bend by an obtuse angle like a letter V turned by 90 degrees as seen in side view, so that part of it protruding toward the right hand side of the vehicle body is not in the way of the front fork 8. Incidentally, in this embodiment, the hydraulic motor 7 is shaped not to project radially outside the hub 41 as seen from the side of the vehicle body.

The housing 44 of the hydraulic motor 7 is provided with a working oil inlet 7a (FIG. 2) and a working oil outlet 7b in positions more toward the rear of the vehicle body than the front fork 8. The working oil outlet 7b, as shown in FIG. 2, is connected through a second working oil return passage 45 to the working oil chamber 35 of the of the hydraulic unit 21. Working oil flowing from the hydraulic motor 7 through the second working oil return passage 45 toward the hydraulic unit 21 flows through the working oil inlet 27b formed in the lower part of the housing 27 into the working oil chamber 35. The working oil inlet 27b and the working oil inlet 27a are provided near one end of the oil filter 30 in the housing 27.

The working oil passage 38 and the second working oil return passage 45 are made of flexible hydraulic hose or the like, routed along the front fork 8, and connected to the working oil inlet 7a and the outlet 7b of the hydraulic motor 7 (not shown).

The bypass passage 39 as shown in FIG. 2 is connected to the operation switching valve 32, the check valve 33, and the relief valve 34 of the hydraulic unit 21.

The operation switching valve 32 is constituted to permit, in its on-state, working oil to flow only through the first working oil return passage 37 and, in its off-state, to interconnect the first working oil return passage 37 and the bypass passage 39. This operation switching valve 32 constitutes the running mode switching means of this invention. That is to say, in its on-state, of the ports A to C shown in FIG. 2, only the ports A and C are interconnected and in its off-state, all the ports A to C are mutually, connected.

As a result, when the operation switching valve 32 is set to the on-state, working oil from the hydraulic pump 5 circulates through the hydraulic route constituted with the hydraulic motor 7, and the components in the hydraulic unit 21, namely the working oil chamber 35, the oil filter 30, and the operation switching valve 32, to rotate the hydraulic motor 7. In case the rear wheel 4 and the front wheel 6 rotate at approximately the same speed, the front wheel 6 is not driven with the hydraulic motor 7, and so the motorcycle 1 is driven with only the drive power on the rear wheel. When the rear wheel 4 races as when running in the mud for instance, drive force is produced on the front wheel 6, with the hydraulic motor 7 serving as a power source, and the rotation of the front wheel 6 enables the vehicle to get out of the mud. The hydraulic motor 7 may be alternatively constituted that, when the operation switching valve 32 is set to the on-state, working oil is supplied in such a manner that a very small drive force, smaller than the rear wheel drive force, is exerted on the front wheel 6. With this constitution, a very small drive force is produced on the front wheel 6 when the revolutions of the front and rear wheels 6 and 4 are approximately the same. Therefore, the moment the rear wheel drive force decreases, as when the rear wheel 4 spins, the small drive force of the front wheel 6 immediately takes effect and increases, and that rapidly. In other words, it is possible to increase the front wheel drive force rapidly with quick response.

On the other hand, when the operation switching valve 32 is set to the off-state, since the working oil supply passage 38 and the first working oil return passage 37 are interconnected through the bypass passage 39 and the operation switching valve 32, hydraulic pressure supplied to the hydraulic motor 7 decreases, and the front wheel 6 is not driven with the hydraulic motor 7. Therefore, when the operation switching valve 32 is set to the off-state while the vehicle is running, the vehicle is switched to the rear wheel drive state, like the ordinary motorcycle. Even in the state of the rear wheel drive, since the hydraulic motor 7 rotates together with the front wheel 6, working oil also circulates through the hydraulic route constituted in the sequence from the hydraulic pump 5 through the working oil supply passage 38, the hydraulic motor 7, and the hydraulic unit 21, to the first working oil return passage 37.

A concrete constitution of the operation switching valve 32 is described below in reference to FIGs. 7 and 8. The operation switching valve 32 comprises; a valve housing 49 attached through two connection pipes 47 and 48 to the housing 27, and a valve body 50 fitted into for vertical reciprocating movement and supported with the valve housing 27.

Of the two connection pipes 47 and 48, the lower-located one 47 is screw-attached to the housing 49 in advance. The upper-located connection pipe 48 is passed through the valve housing 49 through packings 48a and screwed into the housing 27, so that the valve housing 49 is secured to the housing 27. At this time, the other end of the connection pipe 47 is fitted into the working oil outlet 27a of the housing 27. The lower-located connection pipe 47 constitutes part of the first working oil return passage 37, while the upper-located connection pipe 48 constitutes part of the bypass passage 39. The rest parts of the first working oil return passage 37 and the bypass passage 39 are made of flexible hydraulic hoses or the like. Metallic pipes may also be used as a matter of course.

The valve housing 49, as shown in FIG. 8, forms a first communication passage 51 communicating with the first working oil return passage 37, and a second communication passage 52 communicating with the bypass passage 39, and also a valve fitting hole 53 interconnecting these communication passages 51 and 52. A valve body 50 is placed for reciprocal movement in the valve fitting hole 53.

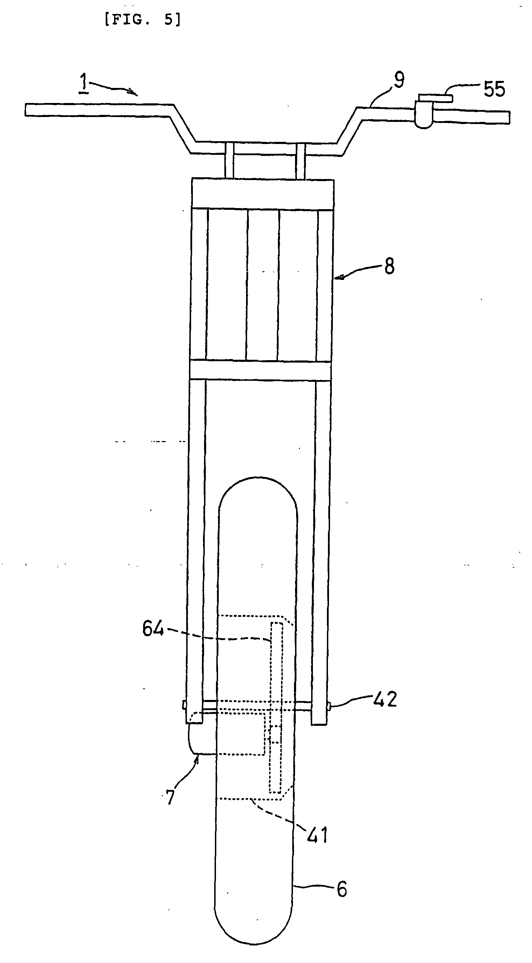

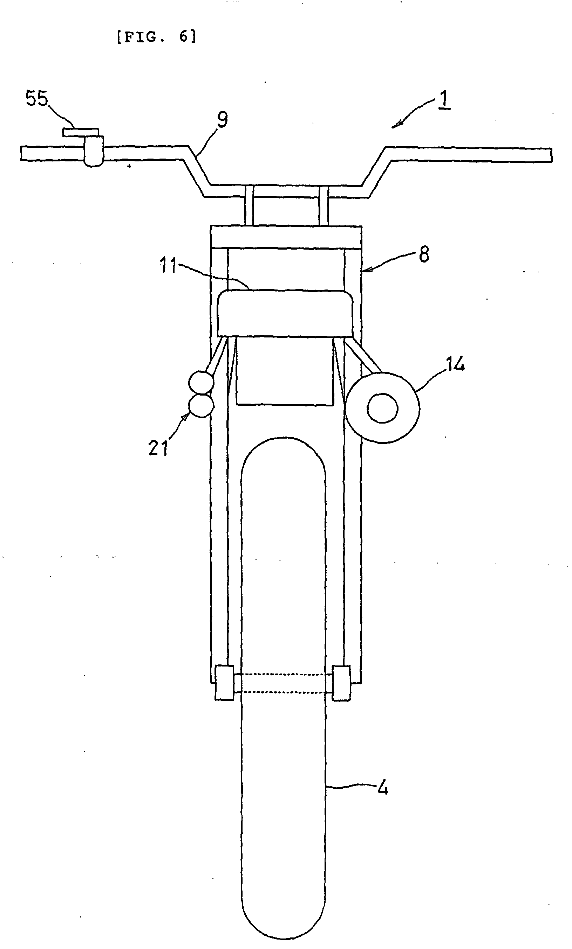

The valve body 50 is, as shown in FIG. 8, connected at its upper end to an operation cable 54. When the valve body 50 is moved down as shown in FIG. 8-A, the valve fitting hole 53 between the communication passages 51 and 52 is closed. When the valve body 50 is moved up as shown in FIG. 8-B, the communication passages 51 and 52 are interconnected through the valve fitting hole 53. The operation cable 54 is connected to a switching lever 55 provided on the grip portion of the steering handlebar 9 as shown in FIGs. 5 and 6. That is, the operation switching valve 32 may be set to the on- or off-state by operating the switching lever 55. This mechanism is convenient for the rider to optionally switch and drive.

The check valve 33 is of the ball type interposed, as shown in FIG. 7, between the upper-located connection pipe 48 of the operation switching valve 32 and the working oil chamber 35 in the housing 27 to permit working oil to flow only in the direction from the working oil chamber 35 to the connection pipe 48. With the check valve 33 interposed as described above, even if the rear wheel 4 locks as brake is applied to the rear wheel 4 on a sharp curve for example and the hydraulic pump 5 stops, the front wheel 6 rotates freely and the vehicle can run through the curve without problem.

That is to say, even if the hydraulic pump 5 locks and the supply of working oil from the hydraulic pump 5 to the hydraulic motor 7 stops, since working oil is supplied from the working oil chamber 35 through the check valve 33 to the hydraulic motor 7, the front wheel 6 and the hydraulic motor 7 can rotate freely.

The relief valve 34, as shown in FIG. 7, is a spring-forced type comprising a valve body 56 supported for vertical up and down movement relative to the housing 27, a coil spring 57 for forcing the valve body 56 in the closing direction, and an adjusting screw 58 for setting the pressure at which the relief valve 34 opens, and is interposed between the bypass passage 39 (located between the check valve 33 and the connection pipe 48) and the working oil chamber 35 (located in the housing 27). In this embodiment, the relief valve 34 is disposed in the vicinity of an end of the pressurizing means 31 located in the housing 27.

The relief valve 34 is constituted to be opened when the pressure in the bypass passage 30, namely the pressure in the working oil supply passage 38, exceeds a preset value (for example several hundred atm) to permit working oil to flow out from the bypass passage 39 to the working oil chamber 35.

With the relief valve 34 is provided as described above, even if the revolution of the hydraulic pump 5 increases extremely as due to racing of the rear wheel 4 in the mud, while the front wheel 6 is still gripping the road surface, since hydraulic pressure is released toward the working oil chamber 35 when the hydraulic pressure exceeds the preset value, the hydraulic circuit such as the working oil supply passage 38 is protected from being damaged.

The front wheel hub 41 for use in the front and rear wheel drive type of motorcycle of this embodiment is, as shown in FIGs. 11 and 12, is made in the shape of a bottomed cylinder, open to the right hand side of the vehicle body (left hand side in FIG. 11), having an integral boss 41b for the wheel shaft to pass through in the axially central portion of the bottom 41a. The boss 41b is made shorter than conventional counterpart, so that it is accommodated between one end of the hub 41 on the right hand side of the vehicle body and the center in the vehicle width direction of the front wheel 6 (shown with a dash-and-dotted line in FIG. 11), and rotatably supported with a double-row ball bearing 61 on the wheel shaft 42. A seal member 62 is interposed between one end of the boss 41b on the vehicle body left hand side (right hand side in FIG. 11) and the wheel shaft 42. A brake disk 63 for a disk brake is attached to one end of the bottom 41a of the hub 41 on the left hand side of the vehicle body.

The hydraulic motor 7 is inserted from the right hand side of the vehicle body into the round recess S formed with the bottom portion 41a and the cylindrical portion 41c of the hub 41. An internal gear 64 fixed to the boundary portion between the bottom portion 41a and the cylindrical portion 41c is made to engage with an output gear 65 of the hydraulic motor 7. The output gear 65 is fixed to the output shaft 40 of the hydraulic motor 7. Incidentally, while this motorcycle 1 has the check valve 33 disposed in the hydraulic circuit so that the front wheel 6 can continue rotation even when the rear wheel 4 locks as braked during running, the check valve 33 may be omitted by interposing a one-way clutch (not shown) in the gear engagement portion between the hub 41 and the hydraulic motor 7 to permit rotation of the front wheel 6 even if the hydraulic motor 7 stops.

The disk-shaped cover 43 for supporting the hydraulic motor 7 is integrally formed with a boss 66 for the wheel shaft 42 to pass through and with a disk 67 extending radially outward from the boss 66, and located to close the round recess S from the right hand side of the vehicle body, with the disk 67 located near the internal gear 64 located deep inside the round recess S. The disk-shaped cover 43 is secured to the front fork 8 through a rotation stop piece (not shown).

The outside circumferential edge of the disk 67 is located in the boundary portion between the bottom 41a and the cylindrical portion 41c of the hub 41, more toward the vehicle body right hand side than the internal gear 64. A seal structure (to be described later) is interposed between the outside circumferential edge of the disk 67 and the inside circumferential surface of the cylindrical portion 41c to prevent entry of foreign matter such as muddy water and sand into the gear engagement portion of the hydraulic motor 7.

The seal structure is constituted with a labyrinth seal 68 and a seal member 69 as shown in FIGs. 11 and 12.

The labyrinth seal 68 is constituted with a groove 68a formed in the outside circumferential surface 67a of the disk 67 opposite, through a small gap, to the inside circumferential surface of the cylindrical portion 41c of the hub 41. The labyrinth seal 68 is displaced slightly toward the left side of the vehicle body from the center, in the vehicle width direction, of the front wheel 6.

The seal member 69 is disposed in the round recess S more toward its bottom than the labyrinth seal 68 to be tightly in contact with the inside circumferential surface of the cylindrical portion 41, and its lip 69a is in sliding contact with the outside circumferential surface of a cylindrical portion 67b formed with a diameter smaller than that of the portion constituting the labyrinth seal 68 in the outside circumferential edge portion of the disk 67. The plural holes 41d bored in the cylindrical portion 41c in a circumferential row is for throwing out with centrifugal force water and muddy water entering the round recess S of the hub 41. On the other hand, water and muddy water coming from outside cannot enter the round recess S through the holes 41d as the cylindrical portion 41c is rotating.

The front and rear wheel drive type of motorcycle 1 of this embodiment comprises as described above; the hydraulic pump 5 driven for interlocked motion with the rear wheel 4, a front wheel-driving hydraulic motor 7 disposed near the front wheel 6 and connected to the hydraulic pump 5, and the pressurizing means 31 interconnecting the front wheel-driving hydraulic motor 7 and the hydraulic pump 5, with the hydraulic pump 5, the front wheel-driving hydraulic motor 7, and the pressurizing means 31 constituting the closed circuit. Therefore, cavitation cannot occur even if the revolution of the hydraulic pump 5 increases rapidly because working oil is pressurized with the pressuring means 31.

As a result, since cavitation is prevented without employing a large reservoir for storing working oil, the hydraulic circuit may be reduced in size and weight while preventing cavitation. Therefore, unlike the conventional front and rear wheel drive type of motorcycle transmitting the engine power mechanically to the front wheel, the vehicle body size in this embodiment may be reduced as the long-extending transmitting device is unnecessary. Therefore, a front and rear wheel drive type of motorcycle may be provided that is very simple in mechanism and has a great degree of freedom in vehicle body layout.

Since the pressurizing means 31 is interposed between the suction side of the hydraulic pump 5 and the discharge side of the hydraulic motor 7, it is possible to pressurize working oil on the suction side of the hydraulic pump 5 and to make cavitation all the more unlikely to occur. Moreover, since the pressurizing means 31 is located in the low pressure side (on the downstream side of the hydraulic motor 7) of the closed circuit, the pressurizing means 31 used may have a relatively low strength against pressure.

In this embodiment, since the engine 2 is used as the power source of the hydraulic pump 5, a front and rear wheel drive type of motorcycle may be easily produced by retrofitting the components of the front wheel drive system to an existing motorcycle. Incidentally, the power source of the hydraulic pump 5 may be an electric motor in place of the engine. When this constitution is employed, the front wheel 6 may be driven with the hydraulic pump 5 driven with the electric motor. In this way, variation in the hydraulic pressure may be held small and cavitation is made more unlikely to occur.

The hydraulic motor 7 is constituted that working oil is supplied to it so that it rotates synchronously with the front wheel 6, when the front and rear wheels 6 and 4 are rotating about the same revolution. Therefore, when the revolutions of the front and rear wheels 6 and 4 are about the same, no drive force is produced on the front wheel 6 even if the hydraulic motor 7 is rotated with hydraulic pressure, unless the drive force on the rear wheel 4 decreases as when the rear wheel 4 spins. Since drive force is produced on the front wheel 6 when drive force on the rear wheel 4 decreases, steering force on the handlebars 9 when the front and rear wheels 6 and 4 rotate without difference in their revolutions is the same as that when only the rear wheel 4 is driven. Moreover, it is possible to shift smoothly and quickly from the running mode of driving the rear wheel 4 only to the running mode of driving both of the front and rear wheels, and that without the rider feeling any shocks.

Constituting that working oil is supplied to the hydraulic motor 7 so that a very small drive force smaller than that on the rear wheel 4 is produced when the front and rear wheels 6 and 4 rotate at about the same rotation speed causes a very small drive force produced on the front wheel 6 when the rotation speeds of the front and rear wheels 6 and 4 are about the same each other. Moment the drive force on the rear wheel 4 decreases as the rear wheel 4 spins, the small drive force on the front wheel 4 takes effect. Moreover, since the drive force increases rapidly, the front wheel drive force can be made to take effect and increase with good response.

Since the operation switching valve 32 for switching between the running mode of driving the rear wheel 4 only and the running mode of driving all the front and rear wheels 6 and 4 is provided, fuel economy is improved by choosing the running mode of driving the rear wheel 4 only on a paved road or the like, so that all the power is transmitted to the rear wheel.

Since the pressurizing means 31 is made by installing the bladder 31a made of rubber in a bag shape and filled with high pressure gas in the housing 27 constituting part of the working oil passage, the constitution of the pressurizing means 31 is simplified by the use of only the two components, the bladder 31 and the housing 27.

In case the constitution is employed in which the pressurizing means 31 comprises a cylinder in which a high pressure gas chamber and a working oil chamber are defined with a free piston, the degree of freedom in setting the pressure is greater in comparison with the constitution using the bladder 31a because the cylinder and the free piston can be made of metal.

The hydraulic circuit is constituted with; the pump unit having the hydraulic pump 5, the motor unit having the hydraulic motor 7, the hydraulic unit 21 having the pressurizing means 31, the oil filter 30, and valves, with the oil filter 30 attached to the housing 27 of the hydraulic unit 21 to form a single body, and with the valves attached to the hydraulic unit 21 to form a single body. Therefore, unlike the conventional front and rear wheel drive type of motorcycle in which relatively small auxiliary devices of the front wheel drive system are mounted individually on the vehicle body, the piping and support brackets for the piping are unnecessary. This simplifies the work of attaching the front wheel drive system components to the vehicle body and the work of maintenance too. Moreover, costs for the auxiliary device piping and their brackets are reduced.

Since the oil filter 30 and the pressurizing means 31 are placed side by side close to and longitudinally parallel to each other in the housing 27 of the hydraulic unit 21, even the constitution of accommodating relatively large two components is made compact. Moreover, since the working oil inlet 27b and the working oil outlet 27a are provided on the longitudinal end of the housing 27, the piping may be located and connected in the direction of increasing the length of the hydraulic unit 21. As shown with this embodiment, the oil filter 30 and the pressurizing means 31 are placed in over and under relation and that the longitudinal direction of the hydraulic unit 21 is parallel to the longitudinal direction of the vehicle body. This makes it possible to compactly mount the hydraulic unit 21 on the side portion of the vehicle body, and to make the constitution of the front wheel drive system all the more compact.

Since the working oil inlet 27b and the working oil outlet 27a are located on one end of the oil filter 30 and the relief valve 34 is located on one end side of the pressurizing means 31, the piping and the relief valve 34 may be connected utilizing a broad side wall formed at the longitudinal end portion of the housing 27 accommodating relatively large oil filter 30 and pressurizing means 31. As a result, the piping and the relief valve 34 may be connected firmly while reducing the arrangement size.

Owing to the following constitution, small stones and projections on the road do not hit directly the seal member 69: The hub 41 of the front wheel 6 is formed in the bottomed cylindrical shape with the cylindrical portion 41c and the bottom portion 41a to form the round recess S that is open on one side. The bottom portion 41a is bearing-supported for rotation on the wheel shaft 42. The disk-shaped cover 43 for closing the round recess S is secured to the wheel shaft 42. The front wheel-driving hydraulic motor 7 is supported with the cover 43. The output shaft 40 of the hydraulic motor 7 is made to engage through gears with the hub 41 within the round recess S closed with the cover 43. The outside circumferential edge of the cover 43 is positioned in the boundary area between the cylindrical portion 41c and the bottom portion 41a. The labyrinth seal 68 is formed between the outside circumferential edge of the cover 43 and the cylindrical portion 41c. And the seal member 69 is interposed in the gap between the outside circumferential edge of the cover 43 and the cylindrical portion 41c, nearer to the bottom portion 41a than the labyrinth seal 68. Moreover, since the labyrinth seal 68 is formed outside the seal member 69, even if muddy water enters the round recess S of the hub 41, the seal member 69 can be isolated with the labyrinth seal 68. Since the seal member 69 and the labyrinth seal 68 are located in a deep position and the axial direction end of the hub does not project sideways, the hub 41 is made compact in the vehicle width direction.

Since the gear engagement portion of the hydraulic motor 7 and the hub 41 is positioned close to the cover 43, it is possible to support the hydraulic motor 7 in the vicinity of the gear engagement portion and that firmly.

Since the double row rolling bearing is used as the bearing 61 for supporting the hub 41, the work of attaching the hub 41 to the wheel shaft 42 is simple. Also it is possible to make the boss 41b of the hub 41 for the wheel shaft 42 to pass through is made relatively short, so that the weight of the hub 41 is reduced.

Since the constitution is employed in which the engine power is transmitted through the rear wheel-driving power transmitting means 17 to the rear wheel 4 to be driven, the front and rear wheel drive type of motorcycle 1 of this embodiment is easily fabricated by replacing only the front wheel drive mechanism of the conventional rear wheel drive type of motorcycle with the hydraulic motor drive type of mechanism.

Since the auxiliary devices of the front wheel drive system are collected in the single hydraulic unit 21, the degree of freedom in choosing the mounting position is increased. That is to say, as shown with this embodiment, it is possible to locate the hydraulic unit 21 on the side that is opposite the muffler 14 in the vehicle width direction to balance the weight in that direction. Although not shown, it is alternatively possible to dispose the hydraulic unit 21 in the vicinity of the engine 2. Employing this constitution makes it possible to arrange heavy components (the engine 2, the hydraulic pump 5, and the hydraulic unit 21) collectively within a small area near the center of gravity of the vehicle body. As shown with this embodiment, another advantage is the ease of maintenance of the hydraulic unit 21 by disposing the hydraulic unit 21 opposite the muffler 14 in the vehicle width direction and above the rear wheel 4.

This embodiment with the hydraulic pump 5 mounted on the crankcase 2b makes it possible not only to collectively locate weights as described above but also facilitates the connection of piping forming the working oil supply passage 38 and the first working oil return passage 37. Moreover, since the hydraulic pump 5 is located near the engine output shaft 15, interconnection of these components is easy, and a short length of the chain 24 suffices for interconnecting the engine output shaft 15 and the hydraulic pump 5.

Since the constitution is employed in which the operation switching valve 32 of the hydraulic unit 21 can be operated with the operation lever 55 on the steering handlebar 9, the switching operation can be easily made between the rear wheel drive run mode and the run mode of driving both the front wheel 6 and the rear wheel 4 while the vehicle is running. In that case, it may be arranged in either way: One way is that, even if working oil is normally supplied from the hydraulic pump 5 to the hydraulic motor 7, the hydraulic motor 7 is simply rotating synchronously with the front wheel 6 without driving force being transmitted from the hydraulic motor 7 to the front wheel 6 to result in the running with the rear wheel drive force only, and only when the rear wheel races as in the mud, the front wheel drive force is produced with the hydraulic motor 7 to enable the vehicle to get out of the mud. The other way is to produce drive forces constantly on both of the front and rear wheels 6 and 4.

### Second Embodiment

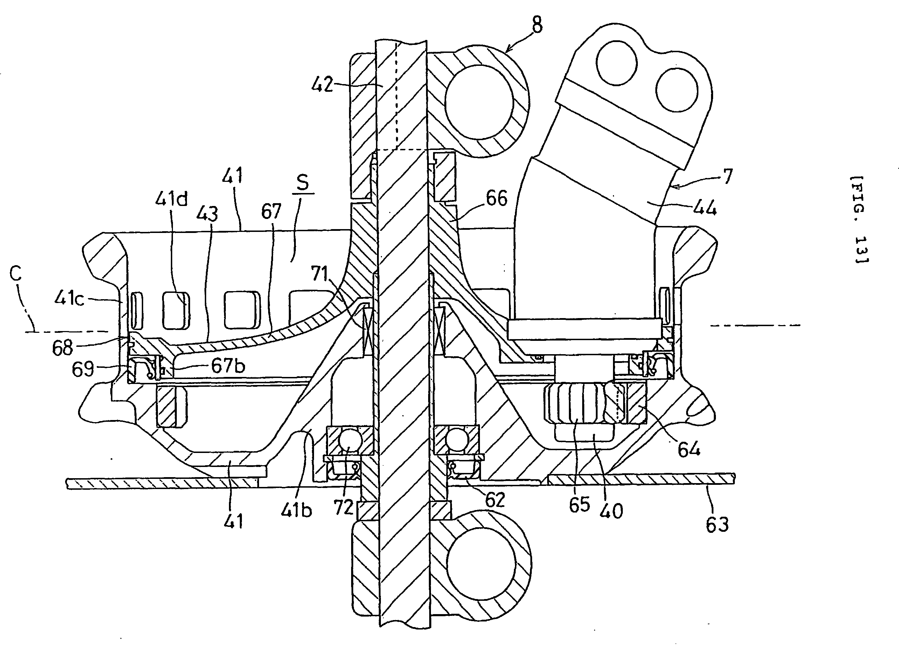

Details of another embodiment of the front and rear wheel drive type of motorcycle are described in reference to FIGs. 13 to 16.

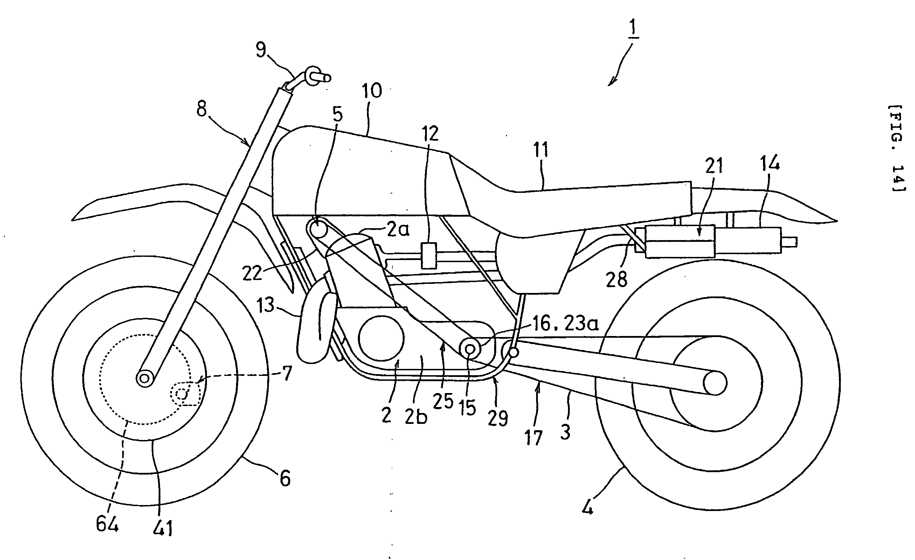

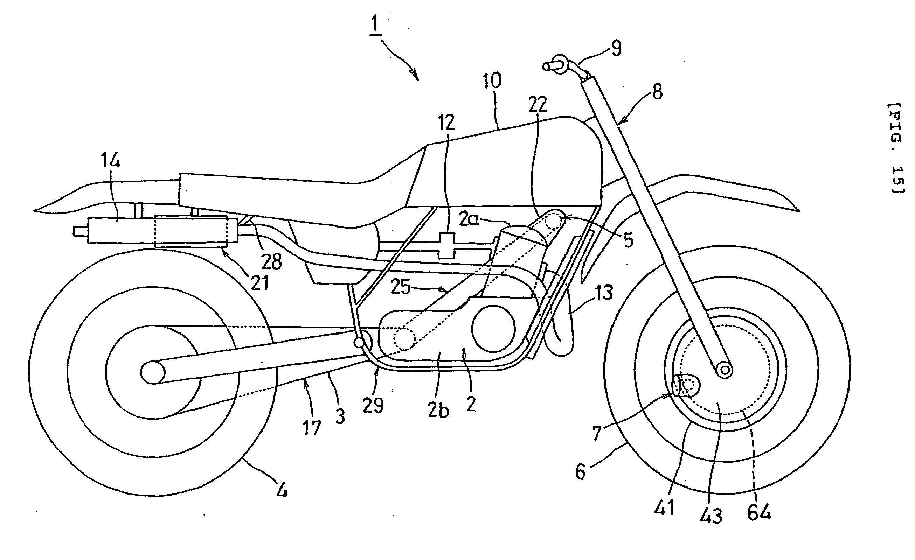

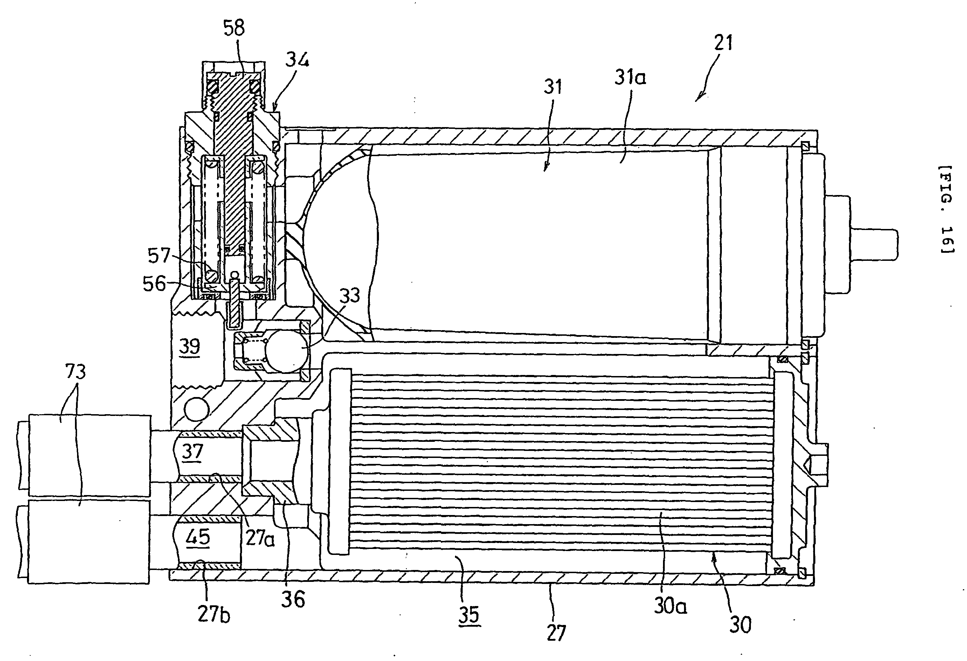

FIG. 13 shows a cross section of another embodiment of the front wheel hub. FIG. 14 is a left side view of a front and rear wheel drive type of motorcycle. FIG. 15 is a right side view of the same motorcycle. FIG. 16 is a cross-sectional view of the hydraulic unit. In these figures, the components that are the same as or equivalent to those described in reference to FIGs. 2 to 12 are provided with the same symbols, and details of them are not described here.

The hub 41 of the front wheel 6 of this embodiment is formed as shown in FIG. 13 with its boss 41b extended toward the vehicle body right side beyond the center, in the vehicle width direction, of the front wheel 6, and with both ends of the boss being rotatably supported with bearings 71 and 72, respectively. Of these bearings 71 and 72, the bearing 71 on the right hand side of the vehicle body is a needle bearing, while the bearing 72 on the left hand side is a single row ball bearing.

The engine 2 of the front and rear wheel drive type of motorcycle 1 is of the two stroke-cycle, single cylinder type as shown in FIGs. 14 and 15, with the hydraulic pump 5 attached to the cylinder head 2a. The input shaft (not shown) of this hydraulic pump 5 is, like in the constitution of the first embodiment, is connected through a chain-drive type of front wheel-driving power transmitting means 25 to the engine output shaft 15. The front wheel-driving power transmitting means 25 may be alternatively of the belt-drive type.

The front and rear wheel drive type of motorcycle 1 of this embodiment is not provided with the operation switching valve in the front wheel drive system. Therefore, the hydraulic unit 21 is arranged as shown in FIG. 16 as a single set with the housing 27 accommodating the oil filter 30, the pressurizing means 31, the check valve 33, and the relief valve 34. The working oil outlet 27a and the working oil inlet 27b of the housing 27 are respectively connected to the hydraulic hoses 73, 73. Even without employing the operation switching valve 32, there is no problem in running with both wheels driven. Incidentally, in this embodiment too, the check valve 33 may be omitted by interposing a one-way clutch (not shown, to permit the rotation of the front wheel 6 even if the hydraulic motor 7 stops) in the gear engagement portion between the front wheel hub 41 and the hydraulic motor 7.

### Third Embodiment

It may be arranged that the hydraulic unit 21 includes only the oil filter 30 and the pressurizing means 31, with other valves separately grouped on the hydraulic pump 5 side and on the hydraulic motor 7 side. That is, a hydraulic system is constituted with the hydraulic unit 21, the hydraulic pump unit, and the hydraulic motor unit, with hydraulic hoses interconnecting them.

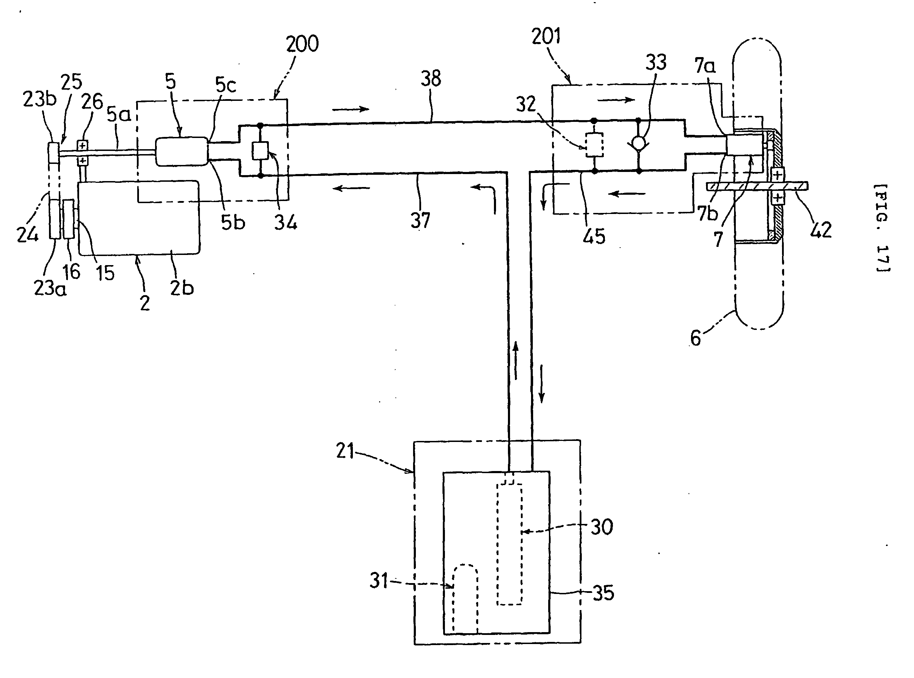

An example of employing the above constitution is shown in FIG. 17.

FIG. 17 shows another example constitution of the hydraulic circuit of the front wheel drive system. In the figure, the components that are the same as or equivalent to those described in reference to FIGs. 2 to 12 are provided with-the same symbols and details of them are not described here.

The hydraulic unit 21 shown in FIG. 17 is arranged as a single component with the housing 27 accommodating only the oil filter 30 and the pressurizing means 31. In this example, the check valve 33 is interposed between the working oil supply passage 38 and the second working oil return passage 45. Since the operation switching valve 32 is not provided in this motorcycle 1 of this embodiment, it is shown with a phantom line in the figure. In case the operation switching valve 32 is to be provided, it may be located in the phantom-lined position shown in FIG. 17.

The check valve 33 is constituted to permit the flow of working oil only from the second working oil return passage 45 to the working oil supply passage 38. The relief valve 34 is interposed between the working oil supply passage 38 and the first working oil return passage 37, and constituted to permit working oil to flow out to the first working oil return passage 37 when the oil pressure in the first working oil return passage 37 exceeds a preset value. Incidentally, the check valve 33 may be omitted by interposing a one-way clutch (not shown, for permitting the rotation of the front wheel 6 even if the hydraulic motor 7 stops) in the gear engagement portion between the front wheel hub 41 and the hydraulic motor 7.

The relief valve 34 may alternatively interposed between the working oil supply passage 38 and the second working oil return passage 45 on the side of the hydraulic motor 7. In any case, the arrangement is made up of three units. In FIG. 17 are shown the hydraulic pump unit 200 and the hydraulic motor unit 201.

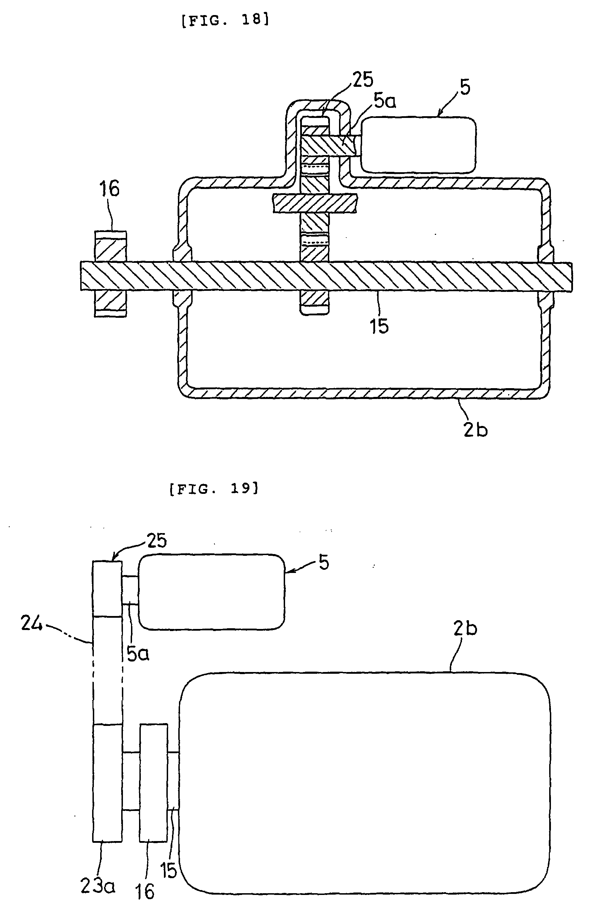

While the hydraulic pump 5 shown in FIG. 17 is located on the vehicle body right hand side on the crankcase 2b, it may be alternatively located differently as shown in FIGs. 18 and 19.

FIGs. 18 and 19 show examples of mounting the hydraulic pump. Components in these figures that are the same as or equivalent to those described in reference to FIGs. 2 to 12 are provided with the same symbols and their detailed description is omitted.

The hydraulic pump 5 shown in FIG. 18 is located in the approximate center in the vehicle width direction on the crankcase 2b, with its input shaft 5a engaging through gears with the engine output shaft 15. Employing this constitution makes maintenance of the front wheel driving power transmitting device 25 unnecessary, balances weights in the vehicle width direction, and enables concentrated positioning of weights.

The hydraulic pump 5 shown in FIG. 19 is located on the left hand side end in the vehicle width direction on the crankcase 2b, with its input shaft 5a engaging with the engine output shaft 15 through the front wheel driving power transmitting device 25 of chain or belt drive type.
Employing this constitution reduces length and weight of the input shaft 5a of the hydraulic pump 5 as practically as possible.

### Fourth Embodiment

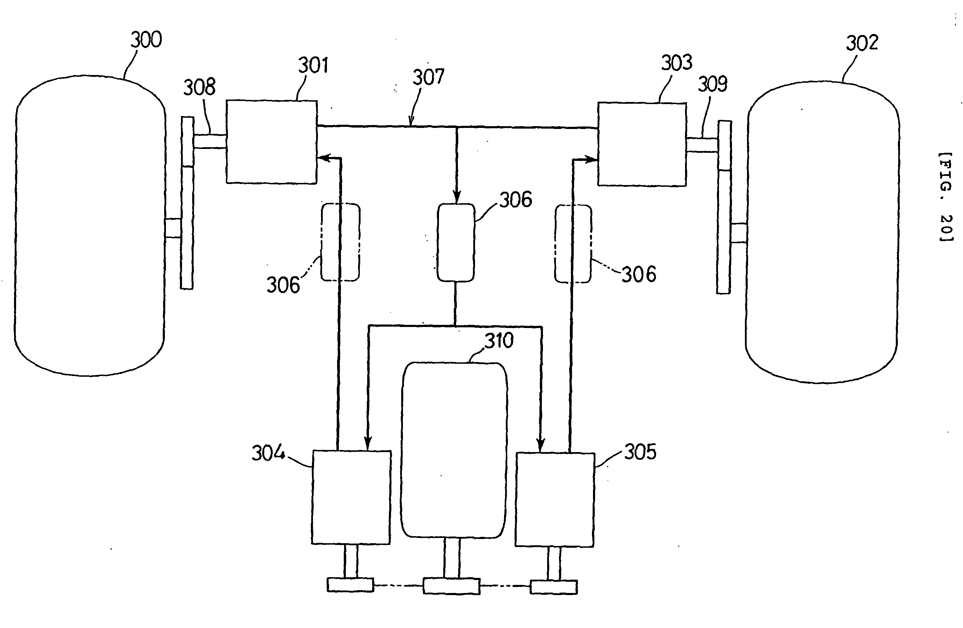

Another embodiment of this invention applied to a small four-wheeled vehicle for running on irregular terrain is explained in reference to FIGs. 20 to 30.

The constitution of the small four-wheeled vehicle for running on irregular terrain is roughly shown in FIG. 20. The figure is drawn in the state of the vehicle running forward. The small four-wheeled vehicle for running on irregular terrain of this embodiment comprises; a hydraulic motor 301 for driving the front wheel 300 on the left hand side of the vehicle body, a hydraulic motor 303 for driving the front wheel 302 on the right hand side of the vehicle body, a hydraulic pump 304 connected to the hydraulic motor 301, a hydraulic pump 305 connected to the hydraulic motor 303, and a pressurizing means 306 interconnecting the hydraulic pumps 304, 305, and the hydraulic motors 301, 303, to constitute a closed circuit with the hydraulic pumps 304, 305, the hydraulic motors 301, 303, and the pressurizing means 306.

The left front wheel driving hydraulic motor 301 receives supply of pressurized working oil from the left hydraulic pump 304 to rotate its output shaft 308 and to drive the left front wheel 300. The right front wheel driving hydraulic motor 303 receives supply of pressurized working oil from the right hydraulic pump 305 to rotate its output shaft 309 and to drive the right front wheel 301.

The hydraulic pumps 304 and 305 are driven with a power source 310 such as an engine or an electric motor mounted on the vehicle body (not shown) and rotate as interlocked with rear wheels (not shown).

The pressurizing means 306 is for pressurizing working oil in the closed circuit 307 and in this embodiment interposed as shown in solid line in FIG. 20 between the suction side of the hydraulic pumps 304, 305 and the discharge side of the hydraulic motors 301, 303. The pressurizing means 306 may be alternatively interposed as shown in phantom line in FIG. 20 between the discharge side of the hydraulic pumps 304, 305 and the suction side of the hydraulic motors 301, 303.

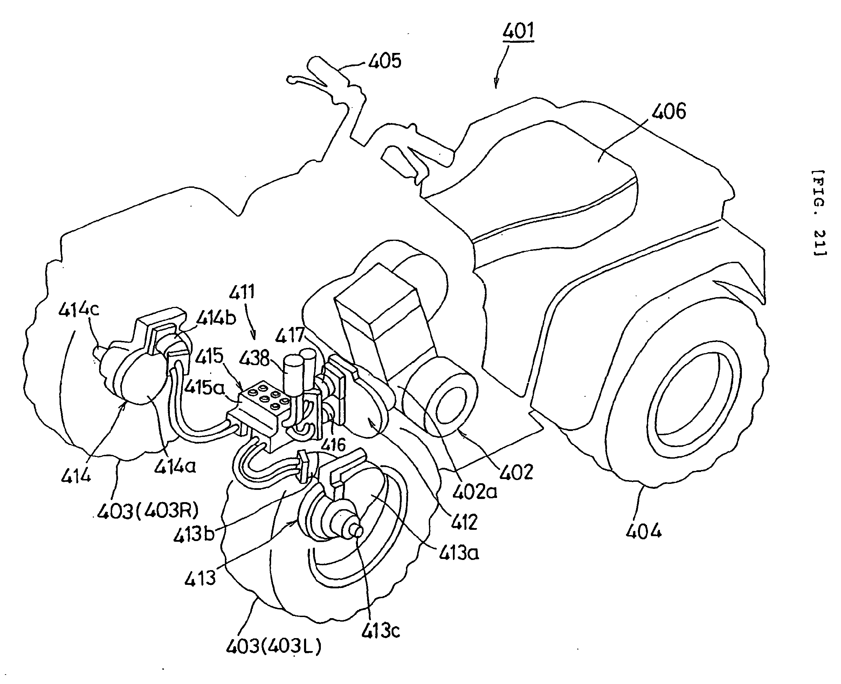

Details of a concrete embodiment of the small four-wheeled vehicle for running on irregular terrain will be described below in reference to FIGs. 21 to 30.

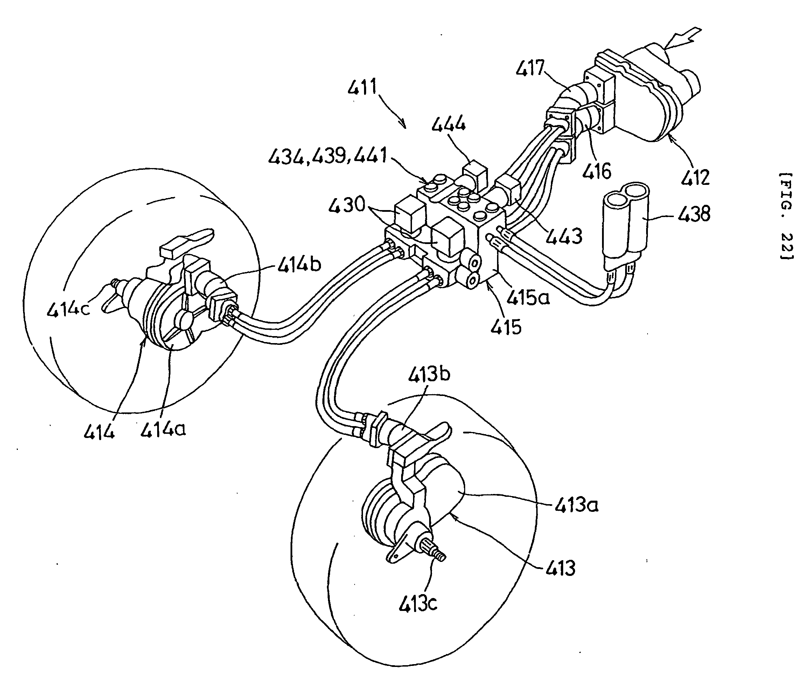

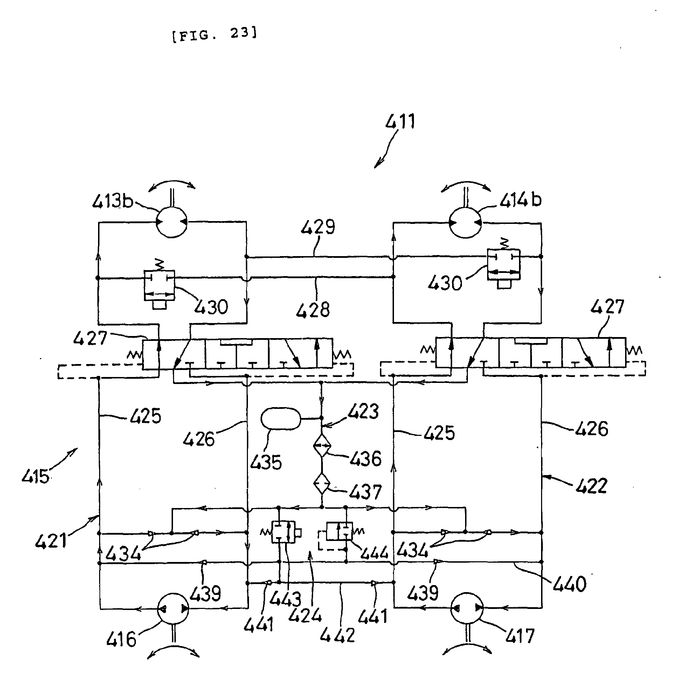

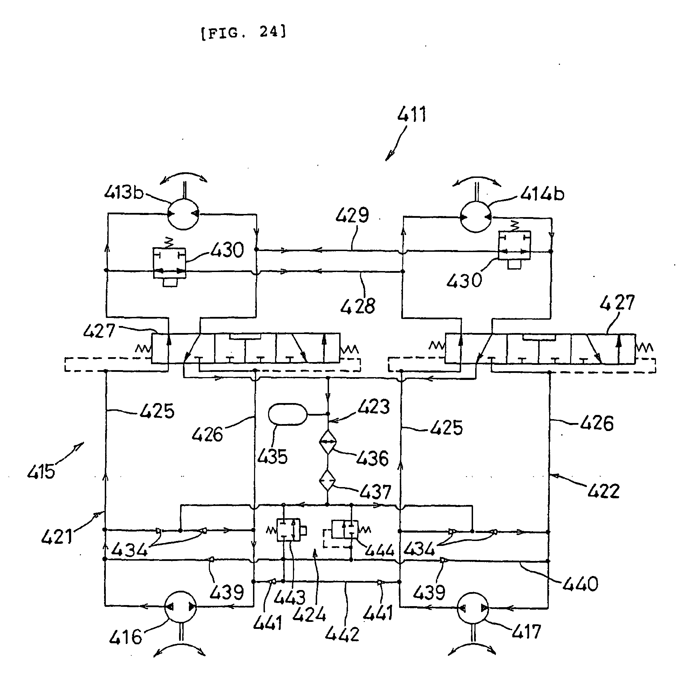

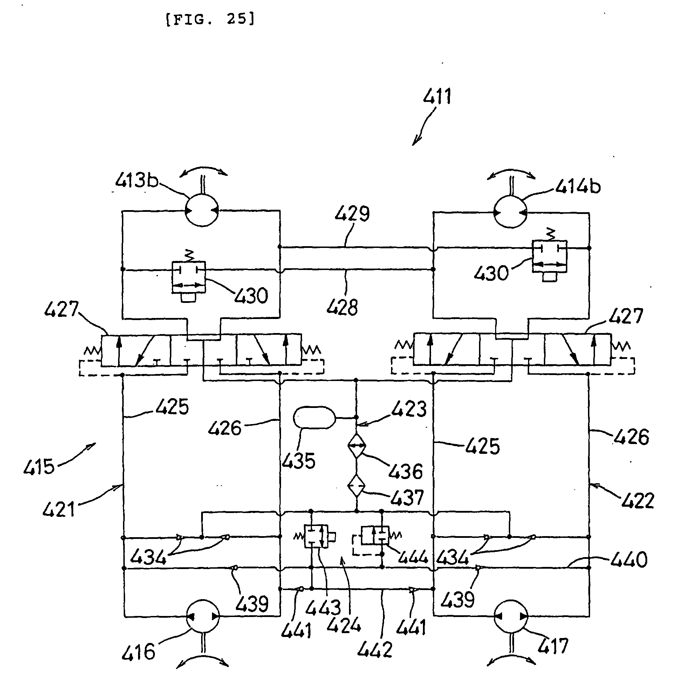

FIG. 21 is an oblique view roughly showing the constitution of the small four-wheeled vehicle of this embodiment for running on irregular terrain. FIG. 22 is an oblique view showing the constitution of the front wheel drive system. FIGs. 23 to 29 show the hydraulic circuit for the front wheel drive system. FIG. 23 shows the state of the vehicle running forward with the differential locked. FIG. 24 shows the state of the vehicle running forward with the differential unlocked. FIG. 25 shows the state of shifting from the forward run to the reverse run.

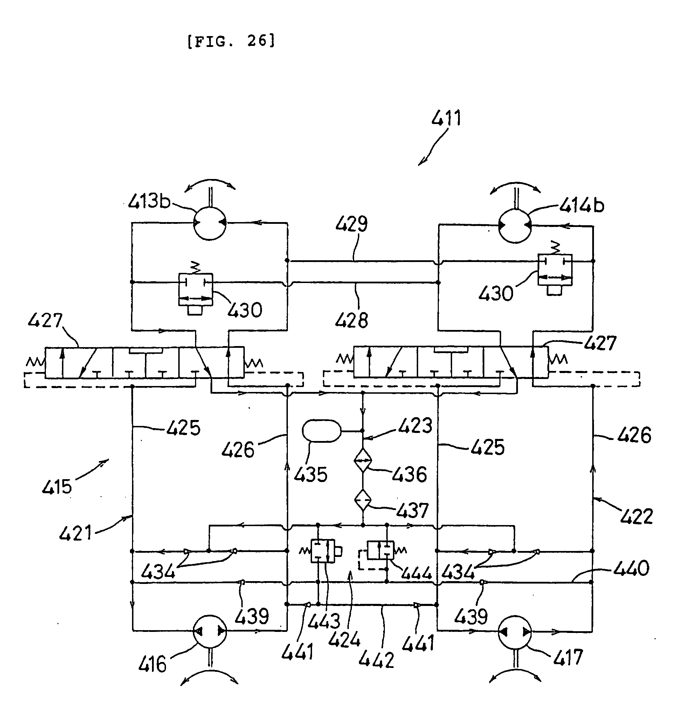

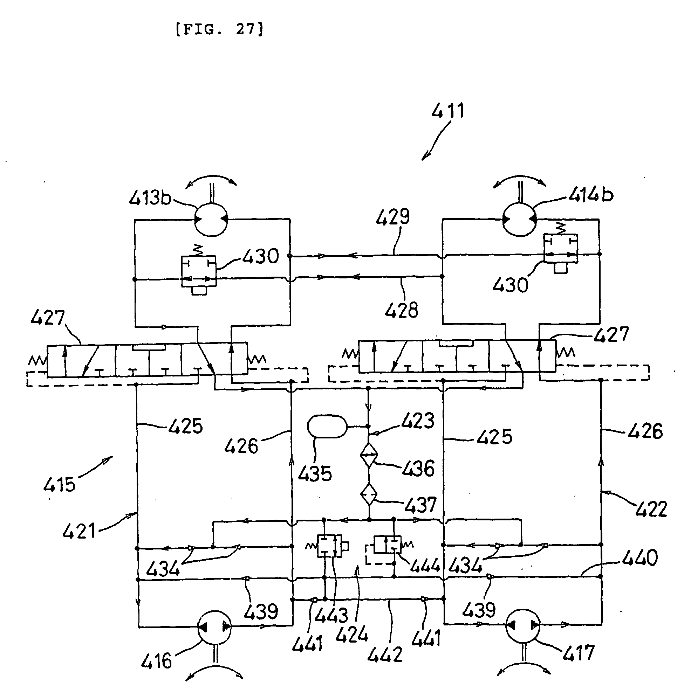

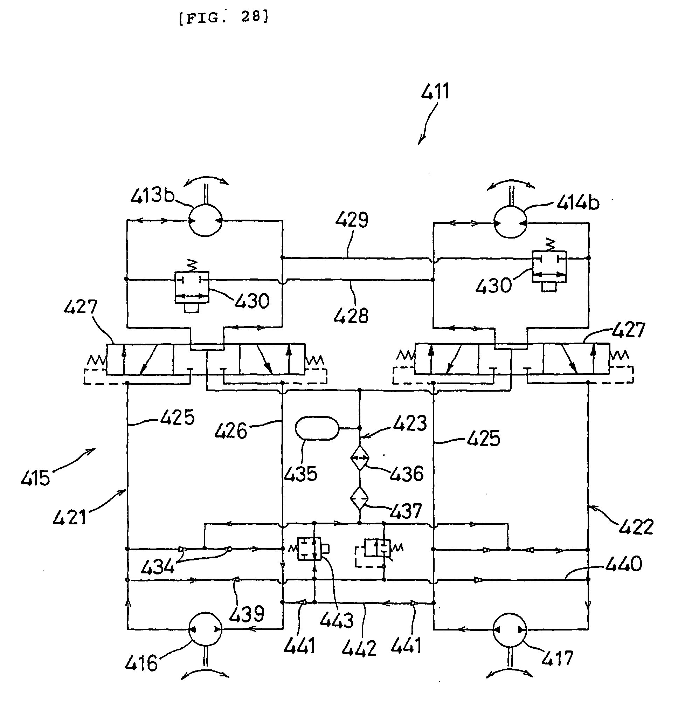

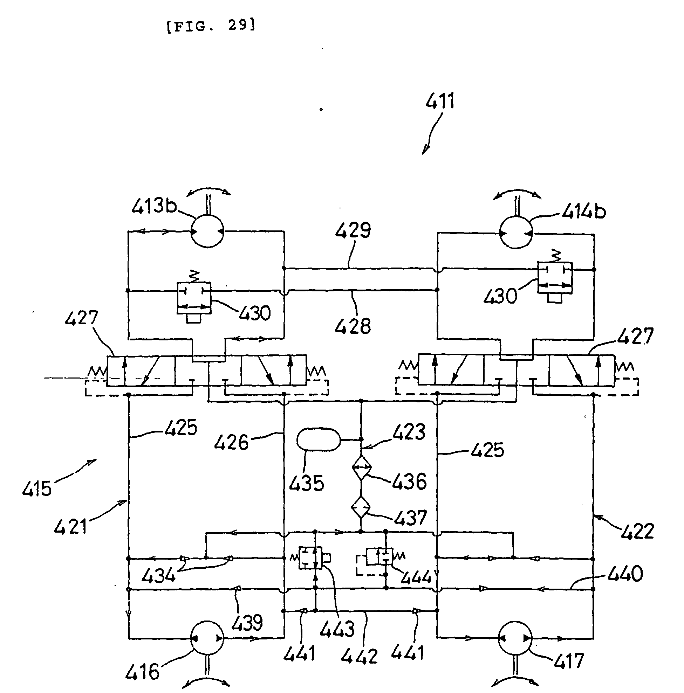

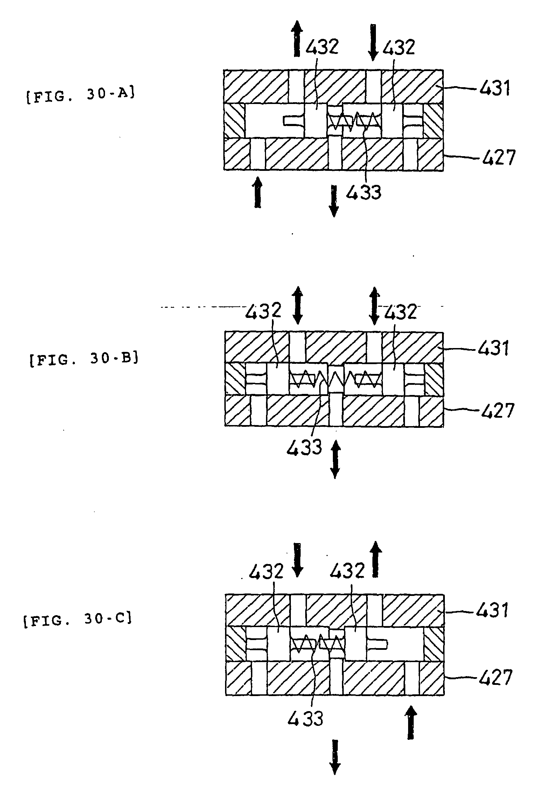

FIG. 26 shows the state of reverse run with the differential locked. FIG. 27 shows the state of reverse run with the differential unlocked. FIG. 28 shows the state of forward run with the rear wheel only driven. FIG. 29 shows the state of reverse run with the rear wheel only driven. FIGs. 30-A, 30-B, and 30-C are cross-sectional views for explaining the operation of a spool valve for switching between forward run and reverse run. FIG. 30-A shows the forward run state. FIG. 30-B shows the state between forward run and reverse run. FIG. 30-C shows the reverse run state.

These figures show a small four-wheeled vehicle 401 of the front and rear wheel drive type for running on irregular terrain. The small four-wheeled vehicle 401 for running on irregular terrain is constituted as follows: An engine 402 mounted on about the center of a vehicle body, and front and rear wheels 403 and 404 are fitted with low pressure balloon tires. Steering handlebars 405 are provided in front of the engine 402 above the vehicle body. A seat 406 is provided above behind the engine 402. The steering handlebars 405 are made of a round bar, like that of a motorcycle. The seat 406 is for a rider to sit on in straddling posture.

The engine 402 is mounted on a vehicle body frame (not shown) and connected to a rear wheel driving device (not shown) and to a front wheel driving device 411 to be described later.

The rear wheel driving device is of the same constitution as that of conventional small four-wheeled vehicles for running on irregular terrain. That is, the rear wheel driving device is constituted with a shaft drive type of power transmitting device extending from the engine 402 toward the rear of the vehicle body with its front end connected to the output shaft of the engine 402; and a single wheel shaft, extending in the vehicle width direction, directly interconnecting right and left rear wheels 404 attached to its both ends, and connected to the rear end of the power transmitting device through bevel gears.

The output shaft of the engine 402 in this embodiment is located more down the power train from the transmission of the engine 402 to extend in the vehicle body width direction, and connected to the rear wheel driving device and the front wheel driving device 411.

The transmission is constituted to change speed in the forward run, and to switch between forward and reverse runs. When the transmission is switched to the forward run side, the output shaft rotates in the normal direction, and when the transmission is switched to the reverse run side, the output shaft rotates in the reverse direction.

The front wheel driving device 411, as shown in FIGs. 21 and 22, comprises; an oil pump unit 412 attached to an end of the crankcase 402a on the forward side of the vehicle body and connected to the output shaft, a left hand side hydraulic motor unit 413 for driving the left front wheel 403L, a right hand side hydraulic motor unit 414 for driving the right front wheel 403R, and a hydraulic control unit 415 interposed in the hydraulic circuits between the oil pump unit 412 and the motor units 413, 414. The hydraulic circuit of the front wheel driving device 411 is constituted as a closed circuit and working oil in the circuit is constantly pressurized with a pressurizing means 435 (FIGs. 23 to 29) to be described later.

The oil pump unit 412 comprises two hydraulic pumps 416, 417, and also a speed increasing device (not shown) for transmitting the rotation of the output shaft of the engine 402 at an increased speed to both of the hydraulic pumps. The hydraulic pumps 416 and 417 are of the axial plunger type known as the so-called swash-plate pump. In FIGs. 21 and 22, the hydraulic pump 416 located in the lower position (hereinafter called the left hydraulic pump) supplies hydraulic pressure to the left hydraulic motor unit 413 to be described later, and the hydraulic pump 417 located in the upper position (hereinafter called the right hydraulic pump) supplies hydraulic pressure to the right hydraulic motor unit 414.

The left and right hydraulic motor units 413 and 414 are constituted in right-left symmetry with; housings 413a, 414a constituting part of the front suspension system and the steering system, hydraulic motors 413b, 414b installed in the housings 413a, 414a, wheel shafts 413c, 414c, and a speed-reduction transmission (not shown) installed in the housings 413a, 414a.

The front suspension system of this embodiment is of the strut type, with the housings 413a, 414a serving as steering knuckles. The steering system is constituted to turn the housings 413a, 414a in right and left directions by rotating the steering handlebars 405 located above the vehicle body.

The hydraulic motor 413b of the left hydraulic unit 413 (hereinafter simply called left hydraulic motor) and the hydraulic motor 414b of the right hydraulic unit 414 (hereinafter simply called right hydraulic motor) are of the axial plunger type known as the so-called swash-plate motor. Their specifications are the same as those of the hydraulic pumps 416 and 417, with their rotary shafts connected through the speed-reduction transmission to the wheel shafts 413c and 414c. Front wheels 403 are attached to the wheel shafts 413c and 414c to rotate together.

The left and right hydraulic motors 413b and 414b are constituted to rotate synchronously with the front wheels 403 in the state of hydraulic pressure supplied in a running state of the front and rear wheels 403 and 404 rotating at about the same revolution. That is to say, even if the hydraulic motors 413b and 414b are rotated with hydraulic pressure, no driving forces are produced on the front wheels 403 as long as the rotating speeds of the front and rear wheels 403 and 404 are the same each other. Incidentally, the hydraulic motors 413b and 414b may be constituted that a very small drive force smaller than that on the rear wheels is applied to the front wheels 403 in the above-mentioned running state.

The hydraulic control unit 415 is to control the hydraulic pressure supplied to the hydraulic motors 413b and 414b, constituted as a unit with plural components to be described later installed in a single housing 415a, and supported on a vehicle body frame (not shown). In this embodiment, the hydraulic control unit 415 is placed in front of the engine 402 and behind the front wheels 403.

Here, the constitution of the hydraulic control unit 415 is explained together with the constitution of the hydraulic circuit of the entire front wheel driving device in reference to FIGs. 22 to 29.

In FIGs. 23 to 29, the hydraulic circuit for driving the left front wheel is shown on the left hand side, and the hydraulic circuit for driving the right front wheel is shown on the right hand side.

The hydraulic control unit 415 is constituted with paired left and right hydraulic circuits 421 and 422, with the circuit 421 connected to the left hydraulic pump 416 and the left hydraulic motor 413b, and with the circuit 422 connected to the right hydraulic pump 417 and the right hydraulic motor 414b, further with a working oil recovery hydraulic circuit 423 and a 2WD-4WD switching hydraulic circuit 424 both interposed between the former two circuits.

Each of the left and right hydraulic circuits 421 and 422 comprises a first and a second working oil passages 425 and 426 with their one side ends connected to the hydraulic pumps 416 and 417 and with their other side ends connected to the hydraulic motors 413b and 414b, respectively. In each of the first and second working oil passages 425 and 426 is interposed a spool valve 27 made as a 5-port, 3-position switching valve.

The first working oil passages 425 of the left and right hydraulic circuits 421 and 422 are interconnected through a first communication passage 428 on the hydraulic motor side of the spool valve 427. The second working oil passages 426 of the left and right hydraulic circuits 421 and 422 are likewise interconnected through a second communication passage 429. In this embodiment, a magnetic opening-closing valve for locking the differential is interposed in each of the_first and second communication passages 428 and 429. The differential is locked when it is necessary to prevent difference in rotation between the left and right front wheels 403L and 403R.

The left and right magnetic valves 430, 430 for locking the differential are made to shut off simultaneously the first and second communication passages 428 and 429 when a differential lock switch (not shown) provided near the handlebars 405 is set to the on position, and to open the first and second communication passages 428 and 429 when the differential lock switch is set to off position.

The spool valve 427 is to switch the hydraulic circuits utilizing hydraulic pressure to establish three running states; a 4WD forward run state, a 4WD reverse run state, and a 2WD run state. The spool valve 427 is constituted that a valve body 432 (FIG. 30) is moved with differential pressure between the first and second working oil passages 425 and 426, and forced with a spring 433 to a neutral position when the differential pressure is nonexistent or the hydraulic pressure is zero. The spool valve 427 is connected to the upstream end of the working oil recovery hydraulic circuit 423 as well as to the first and second working oil passages 425 and 426.

Concrete constitution of the spool valve 427 is shown in FIGs. 30-A to 30-C, in which are shown, the housing 431 of the spool valve 427, the valve body 432, and the spring 433.

The working oil recovery hydraulic circuit 423 is to recover working oil from the hydraulic motors 413b, 414b to the hydraulic pumps 416, 417 when drive force is to be produced on the front wheels 403 to run. The upstream end of the circuit 423 is as described above is connected to the two spool valves 427, while its downstream end is connected to the first and second working oil passages 425 and 426 of the left hydraulic circuit 421 through check valves 434, and to the first and second working oil passages 425 and 426 of the right hydraulic circuit 422 through check valves 434. In this working oil recovery hydraulic circuit 423 are also interposed auxiliary hydraulic devices such as the pressurizing means 435, an oil cooler 436, and an oil filter 437. The pressurizing means 435, the oil cooler 436, and the oil filter 437 are installed in a pressurizing unit housing 438 shown in FIGs. 21 and 22.

The pressurizing means 435 is a bladder made in a bag shape of rubber and filled with compressed air or inert gas and installed in the pressurizing unit housing 438. Working oil in the closed hydraulic circuit of the front wheel driving device 411 is pressurized to about several atm with the pressurizing means 435. The reason for the pressurization is to prevent cavitation from occurring when the hydraulic pressure on the suction side lowers as the revolution of the hydraulic pumps 416, 417 increases extremely, and therefore cavitation is prevented without providing a large reservoir for storing working oil. Incidentally, the pressurizing means 435 is not limited to the bladder (bag) type but may be of any type such as the gas-piston type for pressurizing working oil, with one side of a free piston facing working oil, while the other side facing a high pressure gas chamber.

The 2WD-4WD switching hydraulic circuit 424 comprises; a third communication passage 440 for interconnecting the first working oil passage 425 of the left hydraulic circuit 421 and the second working oil passage 426 of the right hydraulic circuit 422 through check valves 439, a fourth communication passage 442 for interconnecting the second working oil passage 426 of the left hydraulic circuit 421 and the first working oil passage 425 of the right hydraulic circuit 422 through check valves 441, a magnetic opening-closing valve 443 for 2WD-4WD switching disposed between the downstream side of the working oil recovery hydraulic circuit 423 and the third and fourth communication passages 440, 442.

The magnetic opening-closing valve 443 for 2WD-4WD switching is constituted to be opened and closed by the operation of a 2WD-4WD shifting switch (not shown) provided near the steering handlebars 405. When drive force is to be applied to all the front and rear wheels, the valve 443 is closed, and when drive force is to be applied only to the rear wheels, the valve 443 is opened.

A relief valve 444 provided in the downstream portion of the working oil recovery hydraulic circuit 423 is constituted to be opened with hydraulic pressure, when the pressure of the third or fourth communication passage 440 or 442, namely the pressure of the left and right hydraulic circuits 421, 422 introduced through the check valves 439, 441, exceeds a preset pressure, to permit flow of working oil from both of the communication passages to the working oil recovery hydraulic passage 423. With the relief valve 444 is provided in this way, if both of the front and rear wheels are driven and the front wheels 403 are firmly gripping the road surface but the rear wheels spin as in the mud, the hydraulic pressure may exceed the preset value of the relief valve 444 due to sudden rise in the revolution of the hydraulic pumps 416, 417. Even so, since working oil is relieved toward the working oil recovery hydraulic passage 423, the left and right hydraulic passages 421, 422 are prevented from being damaged.

Next will be described the operation of the small four-wheeled vehicle constituted as described above.

When the vehicle is to be driven with drive force produced on all the front and rear wheels 403 and 404 (4WD forward run), the magnetic opening-closing valve 443 for 2WD-4WD switching is closed as shown in FIG. 23, and the transmission of the engine 402 is shifted to the forward run side to run the vehicle forward. First, the running with the differential locked will be described: When the vehicle is driven forward by closing the magnetic opening-closing valve 443 for 2WD-4WD switching and by closing the magnetic valves 430 for locking the differential, the output shaft of the engine rotates in the normal direction, the hydraulic pumps 416, 417 rotate in the normal direction, and the hydraulic pressure in the first working oil passages 425 of the left and right hydraulic circuits 421 and 422 rises.

As a result, the valve body 432 of the spool valve 427 moves as shown in FIGs. 23 and 30-A, and working oil from the left and right hydraulic pumps 416, 417 circulates in the hydraulic route constituted in the sequence of; the first working oil passages 425, the spool valves 427, the hydraulic motors 413b, 414b, the spool valves 427, the working oil recovery hydraulic circuit 423, the second working oil passages 426, and the hydraulic pumps 416, 417.

Circulation of working oil in this way converts the engine power into hydraulic pressure which causes the hydraulic motors 413b, 414b to operate so that the front wheels 403 rotate at about the same rotary speed as that of the rear wheels 404. At this time, when the revolutions of the front and rear wheels-403 and 404 are about the same, no drive force is produced on the front wheels 403, and the vehicle is propelled with the drive force on the rear wheels 404.

When the drive force on the rear wheels 404 lowers as the rear wheels 404 spin and the vehicle speed lowers relative to the revolution of the front wheels 403, drive force is produced on the front wheels 403.

That is to say, the small four-wheeled vehicle 401, even in a 4WD run, runs with drive force produced only on the rear wheels 404 as long as running without the rear wheels 404 spinning, and upon spinning of the rear wheels 404, the vehicle assumes the running state with drive force produced on all the front and rear wheels 403 and 404.

Therefore, steering force is light even in a 4WD run, and when necessary, 4WD function takes effect without delay. Moreover, shifting between 2WD and 4WD is made smooth.

Moreover, since the magnetic valves 430 for locking the differential are closed, working oil does not flow between the left and right hydraulic motors 413b and 414b, and they work independently when the vehicle runs in the 4WD state. Therefore, even when one front wheel 403 spin on a muddy road while running in the 4WD state, the vehicle can escape the muddy place with the drive force on the other front wheel 403.

On the other hand as shown in FIG. 24, in the state of the magnetic valves 430 for locking the differential are opened (with the differential unlocked), the first working oil passages 425 of the left and right hydraulic motors 413b and 414b are intercommunicated and at the same time, the second working oil passages 426 of the left and right hydraulic motors 413b and 414b are intercommunicated. Therefore, when the vehicle turns, part of working oil supplied to one of the left and right hydraulic motors 413b and 414b that is rotating at a lower speed (the hydraulic motor driving the front wheel 403 on the inner side of the turn) flows to the other hydraulic motor through the first communication passage 428. At this time, the second communication passage 429 is used to return part of working oil supplied in excess to the side from which working oil is first supplied.

That is, when the vehicle turns, since the revolution of the front wheels 403 is faster than that of the rear wheels 403 that are directly interconnected, the hydraulic motors 413b and 414b do not produce drive force on the front wheels 403. Moreover, since the amounts of working oil supplied to the hydraulic motors 413b and 414b change commensurate with the revolutions of the left and right front wheels 403, the hydraulic motors 413b and 414b do not serve as resistance against the rotation of the front wheels 403, so that the front wheels 403 rotate smoothly.

In this running mode (4WD with the differential unlocked), in case the rear wheels 404 spin in the mud and also one of the front wheels 403 spins in the mud, there is a possibility that the vehicle cannot get out as the revolution of the hydraulic motor of the spinning front wheel 403 increase, and the output of the other hydraulic motor (drive force on the other front wheel 403) decreases. In such a case, the magnetic valves 430 for locking the differential are closed as shown in FIG. 23 (to lock the differential).

To change from the forward run to the reverse run, the vehicle is stopped and the transmission of the engine 402 is shifted to the reverse side. At this time, when the vehicle is stopped and the output shaft of the engine 402 stops, the hydraulic pumps 416, 417 of the front wheel driving device 411 also stop, and hydraulic pressure in the left and right hydraulic circuits 421, 422 disappears.

When hydraulic pressure disappears in this way, the spool valves 427 work and the valve bodies 432 are brought with the spring force of the springs 433 to the neutral position as shown in FIGs. 25 and 30-B.

After that, when the vehicle is driven reverse with the power of the engine 402, as the output shaft of the engine 402 rotates reverse, the left and right hydraulic pumps 416 and 417 also rotate reverse. As a result, as shown in FIGs. 26 and 30-C, hydraulic pressure in the second working oil passages 426 of the left and right hydraulic circuits 421 and 422 rises, and the valve bodies 432 of the spool valves 427 move in the direction opposite that in the forward run.

During a reverse run, working oil from the hydraulic pumps 416, 417 circulates in the sequence of; the second working oil passages 426, the spool valves 427, hydraulic motors 413b, 414b, the spool valves 427, the working oil recovery hydraulic circuit 423, the first working oil passages 425, and the hydraulic pumps 416, 417, and the left and right hydraulic motors 413b, 414b rotate reverse.

In the state shown in FIG. 26, the magnetic valves 430 for locking differential are closed (with the differential locked) to independently drive the left and right front wheels 403. However, by opening the magnetic valves 430 (with the differential unlocked) during a reverse run too, the left and right front wheels 403 can rotate smoothly during a turn without drive force being produced on the left and right front wheels 403 like during the forward run described above. This state of reverse run with the valves 430 being open is shown in FIG. 27.

In order to run in the mode without drive force produced on the front wheels 403, namely with drive force produced only on the rear wheels 404 (2WD forward run), as shown in FIG. 28, the 2WD-4WD switching magnetic opening-closing valve 443 is opened. When the valve 443 is opened, working oil delivered from the left hydraulic pump 416 circulates through the hydraulic route constituted in the sequence of; the first working oil passage 425 of the left hydraulic circuit 421, the third communication passage 440, the 2WD-4WD switching opening-closing magnetic valve 443, the working oil recovery hydraulic circuit 423, the second working oil passage 426 of the left hydraulic circuit 421, and the left hydraulic pump 416.

On the other hand, working oil delivered from the right hydraulic pump 417 circulates through the hydraulic route in the sequence of; the first working oil passage 425 of the right hydraulic circuit 422, the fourth communication passage 442, the 2WD-4WD switching opening-closing magnetic valve 443, the working oil recovery hydraulic circuit 423, the second working oil passage 426 of the right hydraulic circuit 422, and the right hydraulic pump 417.

That is to say, since the hydraulic pumps 416, 417 are nothing but making working oil circulate without the load of the hydraulic motor, no great differential pressure is produced between the outlet and the inlet of the hydraulic pumps 416, 417, the valve body 432 of the spool valve 427 is brought with the force of the spring 433 to the neutral position as shown in FIG. 30-B, and the hydraulic circuit is divided into one on the hydraulic motor side and the other on the hydraulic pump side. At this time, working oil flows through the hydraulic route comprising the hydraulic motors 413b, 414b, and the spool valves 427. Therefore, the front wheels 403 rotate to follow the forward movement of the vehicle.

Incidentally, when the rear wheels 404 only are driven forward in this way, the differential locking magnetic opening-closing valve 430 is set to the closed position.

When the rear wheels 404 only are driven reverse (2WD reverse run), only the transmission of the engine 402 is shifted to the reverse position without changing the opened or closed state of the valves of the front wheel driving device 411. During this time, working oil in the front wheel driving device 411 flows as shown in FIG. 29.

That is to say, working oil delivered from the left hydraulic pump 416 circulates through the hydraulic route constituted in the sequence of; the second working oil passage 426 of the left hydraulic circuit 421, the fourth communication passage 442, the 2WD-4WD switching opening-closing magnetic valve 443, the working oil recovery hydraulic circuit 423, the first working oil passage 425 of the left hydraulic circuit 421, and the left hydraulic pump 416.

Working oil delivered from the right hydraulic pump 417 circulates through the hydraulic route constituted in the sequence of; the second working oil passage 426 of the right hydraulic circuit 422, the third communication passage 440, the 2WD-4WD switching opening-closing magnetic valve 443, the working oil recovery hydraulic circuit 423, the first working oil passage 425 of the right hydraulic circuit 422, and the right hydraulic pump 417.

As described above, the small four-wheeled vehicle 401 for running on irregular terrain comprises; the hydraulic pumps 416, 417 driven as interlocked with the rear wheels 404, the front wheel driving hydraulic motors 413b, 414b connected to the hydraulic pumps 416, 417 and disposed near the front wheels 403, and the pressurizing means 435 interconnecting the front wheel driving hydraulic motors 413b, 414b and the pressurizing means 435 to constitute a closed circuit with the hydraulic pumps 416, 417, the hydraulic pumps 416, 417, and the pressurizing means 435. Since working oil is pressurized with the pressurizing means 435, cavitation does not occur even if the revolution of the hydraulic pumps 416, 417 increases rapidly.

Since cavitation is prevented without providing a large reservoir for storing working oil, the hydraulic circuit can be made small and light. Therefore, unlike the conventional small four-wheeled vehicle for running on irregular terrain by transmitting the engine power mechanically to the front wheels, a long-extending transmitting device is unnecessary. This provides a front and rear wheel drive type of small four-wheeled vehicle for running on irregular terrain that makes it possible to reduce the size of the vehicle body, to make the mechanism very simple, and to increase the degree of freedom in the vehicle body layout.

Since the pressurizing means 435 is interposed between the suction side of the hydraulic pumps 416, 417 and the discharge side of the hydraulic motors 413b, 414b, it is possible to pressurize working oil on the suction side of the hydraulic pumps 416, 417 to make cavitation all the more unlikely to occur. Moreover, since the pressurizing means 435 is placed on the low pressure side of the closed circuit (on the downstream side of the hydraulic motors 413b, 414b), the pressurizing means 435 used may be of a relatively low strength against pressure.

Interposing the pressurizing means 435 between the delivery side of the hydraulic pumps 416, 417 and the suction side of the hydraulic motors 413b, 414b (on the high pressure side of the closed circuit) makes it possible to pressurize working oil also during the reverse run (when the hydraulic pumps 416, 417 rotate reverse). Therefore, there is no need of changing the constitution of the hydraulic circuit when switching between forward and reverse runs. This makes it unnecessary to switch the working oil passages so that the pressuring means 435 is always located on the low pressure side of the closed circuit during both forward and reverse runs. Therefore, a switching valve for switching the working oil passages is unnecessary, and the cost is reduced.

In this embodiment, since the engine 402 is used as the power source of the hydraulic pumps 416, 417, a small four-wheeled vehicle of the front and rear wheel drive type for running on irregular terrain may be easily fabricated by retrofitting the components of the front wheel drive system to an existing small four-wheeled vehicle for running on irregular terrain. Incidentally, the power source of the hydraulic pumps 416, 417 may be an electric motor in place of the engine 402. In that case, since the front wheels 403 can be driven by driving the hydraulic pumps 416, 417 with the electric motor, variation in the hydraulic pressure may be held small and cavitation is made more unlikely to occur.

The hydraulic motors 413b, 414b are constituted that working oil is supplied so that they rotate synchronously with the front wheels 403 when the front and rear wheels 403 and 404 are rotating about the same revolution. Therefore, when the revolutions of the front and rear wheels 403 and 404 are about the same, no drive force is produced on the front wheels 403 even if the hydraulic motors 413b, 414b are rotated with hydraulic pressure unless the drive force on the rear wheels 404 decreases as when the rear wheels 404 spin. Since drive force is produced on the front wheels 403 when drive force on the rear wheels 404 decreases, steering force on the steering wheel 405 when the front and rear wheels 403 and 404 rotate without difference in their revolutions is the same as that when only the rear wheels 404 are driven. Moreover, it is possible to shift from the running mode of driving the rear wheels 404 only to the running mode of driving all the front and rear wheels 403 and 404 smoothly and quickly, and that without the driver feeling any shocks.

Constituting that working oil is supplied to the hydraulic motors 413b, 414b so that a very small drive force smaller than that on the rear wheels 404 is produced when the front and rear wheels 403 and 404 rotate at about the same rotation speed causes a very small drive force produced on the front wheels 403 when the rotation speeds of the front and rear wheels 403 and 404 are about the same each other. Moment the drive force on the rear wheels 404 decreases as the rear wheels 404 spin, the small drive force on the front wheels 403 takes effect. Moreover, since the drive force increases rapidly, the front wheel drive force can be made to take effect and increase with good response.

Since the 2WD-4WD switching opening-closing magnetic valve 443 is provided to permit switching between the mode of running with the rear wheels 404 only driven and the mode of running with both of the front and rear wheels 403, 404 driven, fuel economy is improved by choosing the running mode of driving the rear wheels 404 only on a paved road or the like so that all the power is transmitted to the rear wheels 404.

Since the pressurizing means 435 is made by installing in the pressure unit housing 438 the bladder made of rubber in a bag shape and filled with high pressure gas, the constitution of the pressurizing means 435 is simplified by the use of only the two components, the bladder and the housing 438.

In case the constitution is employed in which the pressurizing means 435 comprises a cylinder in which a high pressure gas chamber and a working oil chamber are defined with a free piston, the degree of freedom in setting pressures is greater in comparison with the constitution using the bladder because the cylinder and the free piston are made of metal.

The hydraulic circuit is constituted with; the oil pump unit 412 having the hydraulic pumps 416, 417, the left hydraulic motor unit 413 having the hydraulic motor 413b, the right hydraulic motor unit 414 having the hydraulic motor 414b, the hydraulic control unit 415 connected to the pressurizing unit housing 438 having the pressurizing means 435, the oil filter 437, and valves, with the oil filter 437 attached to the pressuring unit housing 438 of the pressurizing unit to form a single body, and with the valves attached to the hydraulic control unit 415 to form a single body. Therefore, unlike the constitution in which relatively small auxiliary devices of the front wheel drive system are individually mounted on the vehicle body, the piping and support brackets for the piping are unnecessary. This simplifies the work of attaching the front wheel drive system components to the vehicle body and simplifies the work of maintenance. Moreover, cost is reduced for the auxiliary device piping and their brackets.

Since the constitution is employed in which the power of the engine 402 is transmitted to the rear wheels 404 to be driven, the small four-wheeled vehicle 401 for running on irregular terrain of the front and rear wheel drive type of this embodiment may be easily fabricated by replacing only the front drive system structure of the conventional small four-wheeled vehicle for running on irregular terrain with the structure of the hydraulic motor drive type.

Since the auxiliary devices of the front wheel drive system are arranged as a single hydraulic control unit 415, the degree of freedom in choosing the mounting position of the hydraulic control unit 415 is increased.

Since the oil pump unit 412 having the hydraulic pumps 416, 417 is attached to the vehicle body front side end of the crankcase 402a of the engine 402, it is possible not only to concentrate weight but also facilitate the connection of pipes constituting the working oil passages such as the first and second working oil passages 425, 426. Moreover, since the hydraulic pumps 416, 417 are located near the engine output shaft, their connection is made easy and that short lengths of the power transmitting members suffice for interconnecting the engine and the hydraulic pumps 416, 417.

Since the constitution is employed in which the hydraulic motor 413b for driving the left front wheel 403L and the hydraulic motor 414b for driving the right front wheel 404 are provided to drive the front wheels independently, unlike the conventional small four-wheeled vehicle for running on irregular terrain, the drive shafts and the differential gears are unnecessary. Moreover, since the left and right hydraulic motors 413b and 414b drive the left and right front wheels independently, a differential locked state is easily brought about, so that a complicated differential locking mechanism is unnecessary. Therefore, the front wheel driving mechanism is made very simple and the degree of freedom in the vehicle body layout is enhanced.

Since two hydraulic pumps 416, 417 are provided, one for the left and the other for the right, and the left and right working oil passages from the hydraulic pumps 416, 417 to the hydraulic motors 413b, 414b are provided independently of each other, the left front wheel 403L and the right front wheel 403R are driven with hydraulic pressure of respectively different hydraulic pumps. Therefore, the hydraulic system is made simple, the hydraulic pumps 416, 417 may be small in size, and the degree of freedom in the vehicle body layout is all the more enhanced.

The constitution is employed in which working oil from the left and right hydraulic motors 413b, 414b is returned through the working oil recovery hydraulic circuit 423 to the hydraulic pumps 416, 417, part of the working oil recovery hydraulic circuit 423 is commonly used for the left and right hydraulic routes, and auxiliary devices for common use for the left and right hydraulic routes are installed in the commonly used part of the working oil recovery hydraulic circuit 423. Therefore, while employing the constitution of driving the left and right front wheels 403 with hydraulic pressure, the hydraulic auxiliary devices can be used commonly for the left and right hydraulic routes. As a result, the number, size, and cost of components are reduced.

Since the magnetic opening-closing valve 430 for locking the differential is provided to individually operate the left and right hydraulic motors 413b, 414b, even when one front wheel 403 spins in the mud for example, the vehicle can continue running with drive force on the other front wheel 403 by individually operating the left and right hydraulic motors 413b, 414b. Therefore, a small four-wheeled vehicle of the front and rear wheel drive type can be realized that has high performance of running on roads of unfavorable conditions.

Since the constitution is employed that transmits power of the engine 402 through the mechanical power transmitting means to the rear wheels 404 to be driven, the small four-wheeled vehicle for running on irregular terrain of the front and rear wheel drive type of this invention may be easily constituted by replacing only the front drive system structure of the conventional small four-wheeled vehicle for running on irregular terrain with the structure of the hydraulic motor drive type.

Since the constitution is employed in which the 2WD-4WD switching magnetic opening-closing valve 433 can be opened or closed with the switch provided near the steering wheel 405, operation of switching can be easily made between the rear wheel drive run mode and the all wheel drive run mode of driving all the front wheels 403 and the rear wheels 404 while the vehicle is running.

### Fifth Embodiment

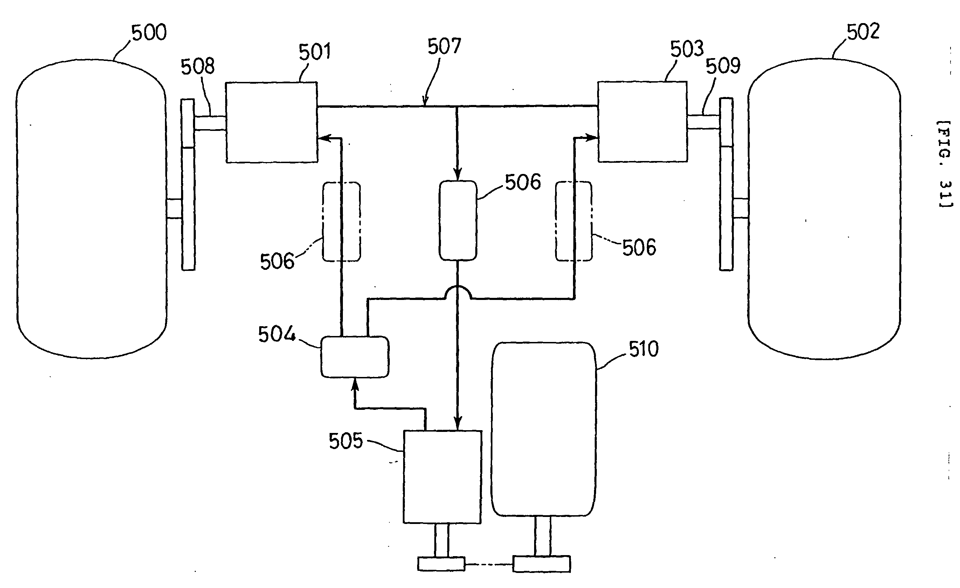

Still another embodiment of this invention applied to a small four-wheeled vehicle for running on irregular terrain is explained in reference to FIGs. 31 to 37.

The constitution of the small four-wheeled vehicle for running on irregular terrain is roughly shown in FIG. 31. The figure is drawn in the state of the vehicle running forward. The small four-wheeled vehicle for running on irregular terrain of this embodiment comprises; a hydraulic motor 501 for driving the front wheel 500 on the left hand side of the vehicle body, a hydraulic motor 503 for driving the front wheel 502 on the left hand side of the vehicle body, a hydraulic pump 504 connected to the hydraulic motors 501, 503 through a flow rate equally dividing means 504, and a pressurizing means 506 interconnecting the hydraulic pump 505 and the hydraulic motors 501, 503, to constitute a closed circuit 507 with the hydraulic pump 505, the hydraulic motors 501, 503, and the pressurizing means 506.

When working oil under pressure is supplied from the hydraulic pump 505 through the flow rate equally dividing means 504 to the left front wheel driving hydraulic motor 501, the output shaft 508 of the hydraulic motor 501 rotates to drive the left front wheel 500. Also, when working oil under pressure is supplied from the hydraulic pump 505 through the flow rate equally dividing means 504 to the right front wheel driving hydraulic motor 503, the output shaft 509 of the hydraulic motor 503 rotates to drive the right front wheel 502. The flow rate equally dividing means 504 is constituted to distribute pressurized working oil from the hydraulic pump 505 to the hydraulic motors 501, 503.

The hydraulic pump 505 is constituted to be driven with the engine or an electric motor mounted on the vehicle body (not shown) and rotated as interlocked with the rear wheels (not shown).

The pressurizing means 506 is to pressurize working oil in the closed circuit 507 and interposed, in this embodiment as shown with solid line in FIG. 31, between the suction side of the hydraulic pump 505 and the discharge side of the hydraulic motors 501, 503. The pressurizing means 506 may be alternatively interposed, as shown with phantom line in FIG. 31, between the delivery side of the hydraulic pump 505 and the suction side of the hydraulic motors 501, 503.

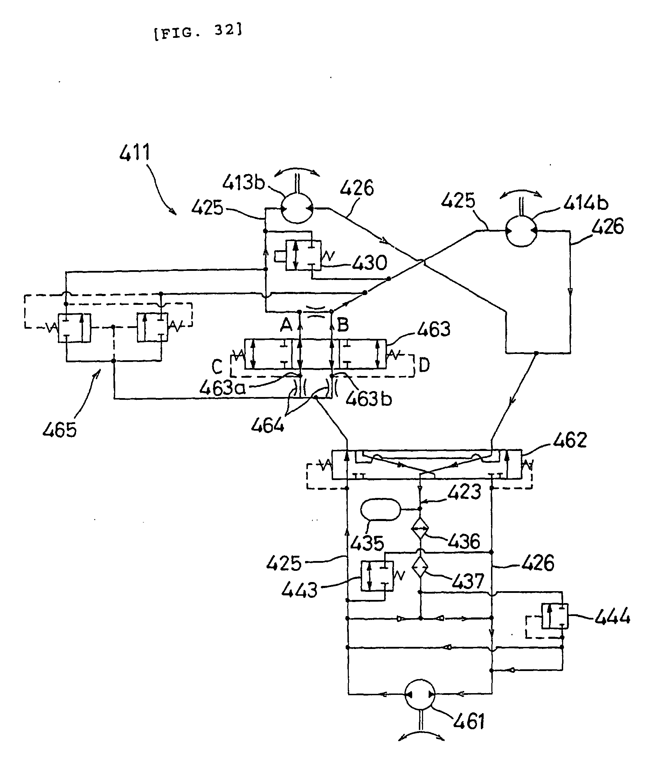

Details of a concrete embodiment of the small four-wheeled vehicle for running on irregular terrain will be described below in reference to FIGs. 32 to 36.

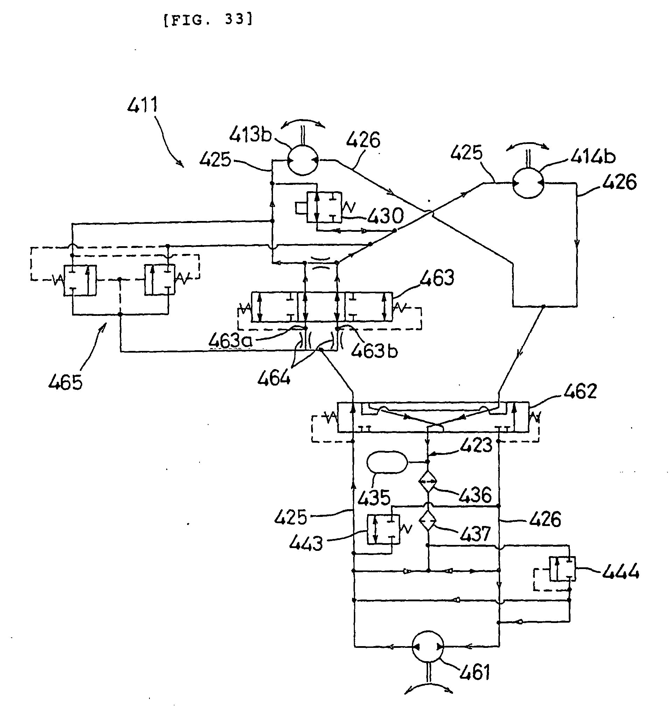

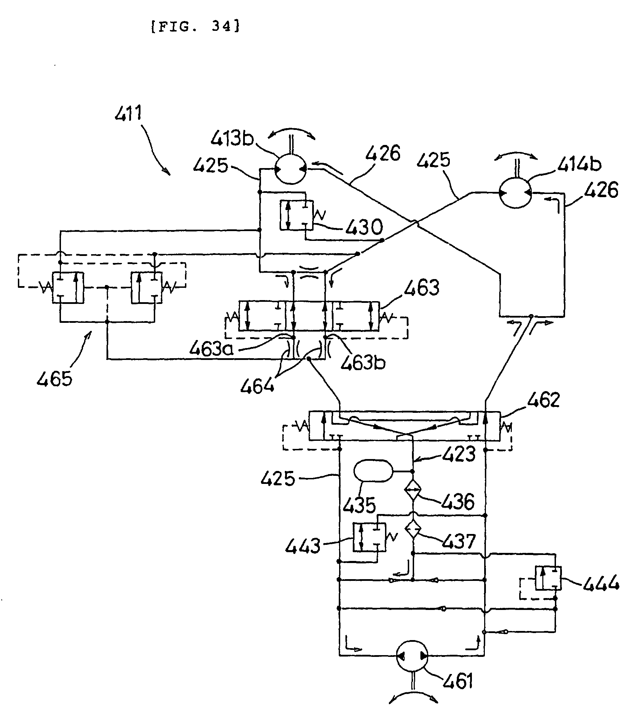

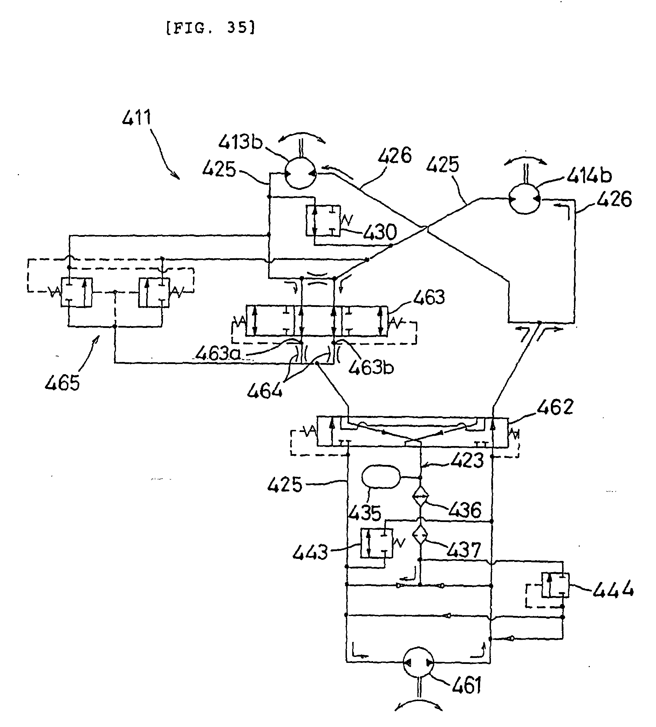

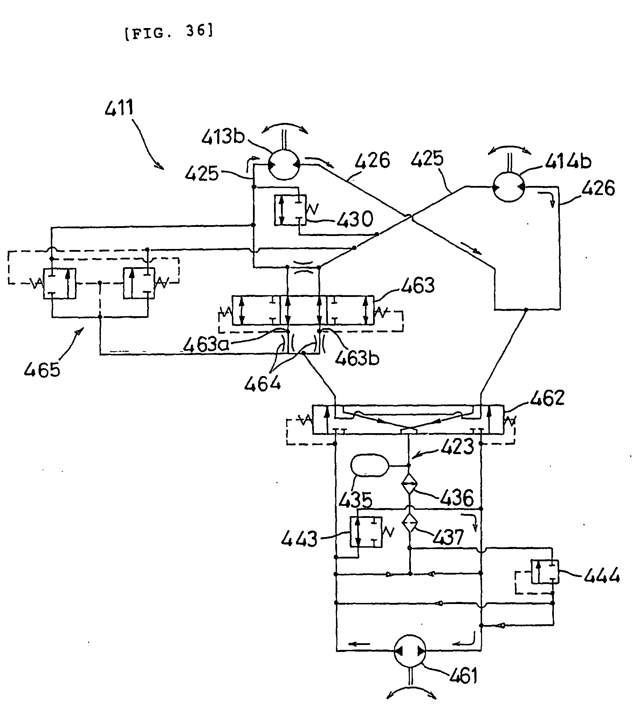

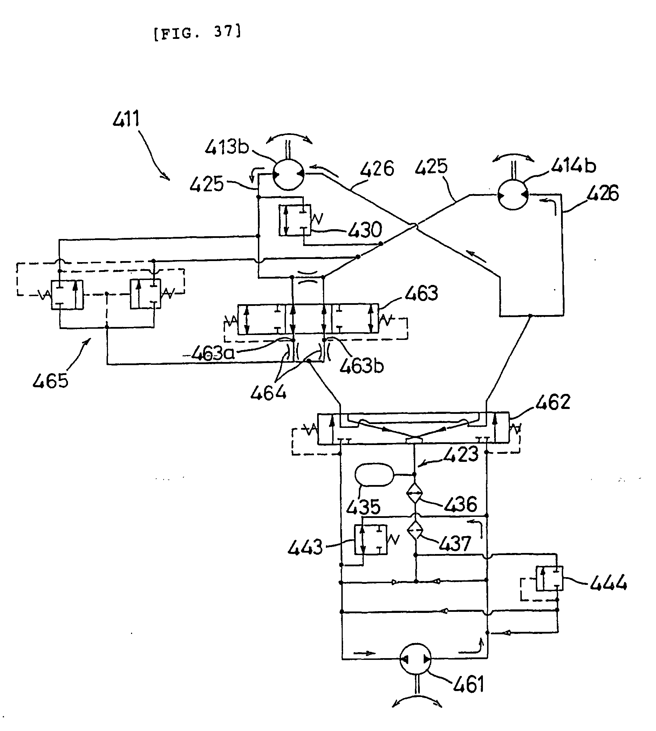

FIGs. 32 to 36 show the hydraulic circuits of the fifth embodiment. FIG. 32 shows the state of the vehicle running forward with the differential locked. FIG. 33 shows the state of the vehicle running forward with the differential unlocked. FIG. 34 shows the state of the vehicle running reverse with the differential locked. Fig. 35 shows the state of the vehicle running reverse with the differential unlocked. FIG. 36 shows the state of the vehicle running forward with only the rear wheels driven. FIG. 37 shows the state of the vehicle running reverse with only the rear wheels driven. In these figures, components that are the same as or equivalent to those explained in reference to FIGs. 21 to 30 are provided with the same symbols and their detailed explanation is omitted.

A front wheel driving device 411 shown in FIGs. 32 to 37 comprises a first spool valve 462 of 4-port 3-position switching type and a second spool valve 463 of 4-port 3-position switching type for working oil distribution, both interposed between an engine-driven hydraulic pump 461 and left and right hydraulic motors 413b, 414b. The second spool valve 463 corresponds to the flow rate equally dividing means of this invention.

The hydraulic pump 461 is the same as that used in the fourth embodiment. A working oil recovery hydraulic circuit 423 is interposed between the first spool valve 462 and the first and second working oil passages 425, 426. In addition, the 2WD-4WD switching magnetic opening-closing valve 443 is interposed between the first and second working oil passages 425 and 426.

The first spool valve 462 is to change the direction of working oil flow between the forward and reverse runs, the valve body of which is moved with hydraulic pressures in the first and second working oil-passages 425 and 426 against the resilient force of a spring. When the hydraulic pressures in these working oil passages 425 and 426 become equal to each other or zero, the valve body is brought to the neutral position with the resilient force of the spring. The first spool valve 462 is connected to the first and second working oil passages 425 and 426, and also to the upstream side of the working oil recovery hydraulic circuit 423.

The second spool valve 463 controls to equally divide the flow rates of working oil supplied to the left and right hydraulic motors 413b, 414b, and is constituted that the valve body moves against the resilient force of the spring due to the differential pressure between two working oil inlets 463a, 463b during forward run (outlets during reverse run). The two working oil inlets (outlets) 463a, 463b are connected through throttles 464 of an identical diameters respectively to the first working oil passages 425 (during forward run) or to the second working oil passages 426 (during reverse run).

A differential locking magnetic opening-closing valve 430 is interposed between the two first working oil passages 425 of the hydraulic motors 413b, 414b. Two second working oil passages 426 of the hydraulic motors 413b, 414b are interconnected and further connected to the first spool valve 462.

In this embodiment, a high speed bypass valve 465 is interposed between the upstream side of the second spool valve 463 and the first working oil passages 425 of the hydraulic motors 413b, 414b. The high speed bypass valve 465 is interposed between the working oil passage that becomes the upstream side of the throttle 464 during the forward vehicle run and the first working oil passages 425 of the hydraulic motors 413b, 414b, and constituted to supply working oil efficiently during forward run (when working oil flows in the arrow direction in FIG. 32) at a high speed (when the hydraulic pump 461 rotates at a high speed), with working oil bypassing the second spool valve 463 due to the presence of the throttle 464.

In order to run the small four-wheeled vehicle of this embodiment with drive forces produced on the front and rear wheels 403, 404 (4WD forward run), as shown in FIG. 32, the 2WD-4WD switching magnetic opening-closing valve 443 is closed, the differential locking magnetic opening-closing valve 430 is closed (with the differential locked), and the transmission of the engine 402 is shifted to the forward position to run the vehicle forward. When the vehicle is driven forward in this way, the engine output shaft rotates in the normal direction to rotate the hydraulic pump 461 in the normal direction, and the oil pressure in the first working oil passage 425 rises. As a result, the valve body of the first spool valve 462 moves to the right as shown in FIG. 32, and the oil pressure is applied to the second spool valve 463.

During a low speed vehicle run, working oil flows through the throttles 464 of the same diameters and the second spool valve 463 at equal flow rates to the two first working oil passages 425 of the left and right hydraulic motors 413b, 414b, so that they rotate at the same speed. During a high speed run, as the throttles 464 serve as resistance, working oil bypasses the second spool valve 463 and flows efficiently through the high speed bypass valve 465 to the first working oil passages 425. Working oil entering the first working oil passages 425 flows through the hydraulic motors 413b, 414b and the second working oil passages 426 back to the first spool valve 462, and further through the working oil recovery hydraulic circuit 423 back to the hydraulic pump 461.

When working oil circulates as describe above, power of the engine 402 is converted into hydraulic pressure to operate the hydraulic motors 413b, 414b so that the front wheels 403 rotate at about the same speed as that of the rear wheels 404. At this time, in case the revolutions of the front and rear wheels 403, 404 are approximately the same each other, no drive force is produced on the front wheels, and the vehicle is driven with drive force produced only on the rear wheels 404.

When the drive force on the rear wheels 404 decreases as when the rear wheels 404 spin and the vehicle speed decreases relative to the revolution of the front wheels 403, drive force is produced on the front wheels 403. That is to say, the small four-wheeled vehicle 401, even in a 4WD run on a road surface that does not cause the rear wheels 404 to spin, assumes a running state with drive force produced on only the rear wheels 404, and when the rear wheels 404 spin, drive force is produced on the front and rear wheels 403 and 404.

Therefore, the steering force is small even during a 4WD run, and the 4WD function takes effect whenever it is necessary without delay, and that the shift from the 2WD to the 4WD is made smooth.

When the left front wheel 403L for example spins in the mud while running in the 4WD mode described above, the hydraulic circuit is controlled with the second spool valve 463 to produce greater drive force on the other front wheel 403R. That is, in this case, as the left front wheel 403L spins, flow rate at the port A of the second spool valve 463 becomes greater than the flow rate at the port B, the pressure on the pressure receiving area C relatively decreases, and the valve body moves toward the left from the position shown in FIG. 32. As a result, working oil flows only to the port B and most of working oil is supplied to the right hand side hydraulic motor 414b. This increases driving force on the right hand side front wheel 403R, so that the vehicle can get out of the mud. When the flow rate at the port B increases to some extent, the pressure at the pressure receiving area D decreases, and the valve body moves toward the right as seen in FIG. 32 to return to the initial position.

As the valve body moves back and forth as described above, the drive force on one front wheel 403 increases when the other front wheel 403 spins and returns to the original state the next moment. Therefore, the amounts of working oil supplied to the left and right hydraulic motors 413b, 414b are constantly controlled to be approximately the same each other. In other words, the vehicle can be driven with the differential locked, and even if one front wheel 403 spins in the mud during a 4WD run, the vehicle can get out of the mud with the drive force of the other front wheel 403.

The irregular terrain running small four-wheeled vehicle of this embodiment can assume a running state with the differential unlocked as shown in FIG. 33 by opening the differential locking magnetic opening-closing valve 430, with the two first working oil passages 425 of the left and right hydraulic motors 413b, 414b interconnected. Therefore, during a turn in the 4WD state, part of working oil flowing to one of the left and right hydraulic motors 413b, 414b on the side of the slower rotation speed (one hydraulic motor driving the front wheel 403 on the inner side of the turn) flows through the differential locking magnetic opening-closing valve 403 to the other hydraulic motor.

That is, when the vehicle turns, since the revolution of the front wheels 403 is faster than that of the rear wheels 403 that are directly interconnected between right and left, the hydraulic motors 413b and 414b do not produce drive force on the front wheels 403. Moreover, since the amounts of working oil supplied to the hydraulic motors 413b and 414b change commensurate with the revolutions of the left and right front wheels 403, the hydraulic motors 413b and 414b do not serve as resistance against the rotation of the front wheels 403, so that the front wheels 403 rotate smoothly.

In this running mode (with the differential unlocked), in case the rear wheels 404 spin in the mud and also one of the front wheels 403 spins in the mud, it is possible that the vehicle cannot get out of the mud as the revolution of the hydraulic motor of the spinning front wheel 403 increase, and the output of the other hydraulic motor (drive force on the other front wheels 403) decreases. In such a case, the magnetic valve 430 for locking differential is closed as shown in FIG. 32 (with the differential locked).

To change from the forward run to the reverse run with the small four-wheeled vehicle of this embodiment, the vehicle is stopped and the transmission of the engine 402 is shifted to the reverse position. At this time, when the vehicle is stopped and the output shaft of the engine 402 stops, the hydraulic pump 416 of the front wheel driving device 411 also stops, and hydraulic pressure in the hydraulic circuits disappears.

When hydraulic pressure disappears in this way, the valve body of the first spool valve 462 is brought with the spring force to the neutral position. After that, when the vehicle is driven reverse with the power of the engine 402, as the output shaft of the engine 402 rotates reverse, the hydraulic pumps 461 rotates reverse. As a result, hydraulic pressure in the second working oil passages 426 increases and as shown in FIG. 34, the valve body of the first spool valve 462 moves in the direction opposite that in the forward vehicle run.

During the reverse run, working oil circulates in the sequence from the hydraulic pump 461, through the second working oil passages 426, the first spool valve 462, the hydraulic motors 413b, 414b, the second spool valve 463, the first spool valve 462, the working oil recovery hydraulic circuit 423, the first working oil passage 425, and the hydraulic pumps 461. The left and right hydraulic motors 413b, 414b rotate in the reverse direction.

In the state shown in FIG. 34, the magnetic valve 430 for locking differential is closed (with the differential locked) to independently drive the left and right front wheels 403. However, by opening the magnetic valve 430 (with the differential unlocked) during a reverse run too, the left and right front wheels 403 can rotate smoothly during a turn without drive force being produced on the left and right front wheels 403, like during the forward run described above. This state of reverse run with the valve 430 being open is shown in FIG. 35.

In order to run in the mode without drive force produced on the front wheels 403, namely with drive force produced only on the rear wheels 404 (2WD forward run), as shown in FIG. 36, the 2WD-4WD switching magnetic opening-closing valve 443 is opened. When the valve 443 is open, working oil delivered from the hydraulic pump 461 circulates through the hydraulic route constituted in the sequence of; the first working oil passage 425, the 2WD-4WD switching opening-closing magnetic valve 443, the second working oil passage 426, and the hydraulic pump 461.

That is to say, the since the hydraulic pump 461 is nothing but causing working oil to circulate without the load of the hydraulic motors, no great differential pressure is produced between the outlet and the inlet of the hydraulic pump 461, the valve body of the first spool valve 462 is brought with the spring force the 433 to the neutral position, and the hydraulic circuit is divided into one on the hydraulic motor side and the other on the hydraulic pump side. At this time, working oil flows through the hydraulic route comprising the hydraulic motors 413b, 414b, and the first and second spool valves 462, 463. Therefore, the front wheels 403 rotate to follow the forward movement of the vehicle.

When the rear wheels 404 only are driven forward in this way, the differential locking magnetic opening-closing valve 430 is set to the closed position.

When the vehicle runs in the reverse direction (2WD reverse run) with drive force produced only on the rear wheels 404, only the transmission of the engine 402 is shifted to the reverse position without changing the opened or closed state of the valves of the front wheel driving device 411. During this time, working oil in the front wheel driving device 411 flows as shown in FIG. 37.

That is to say, working oil delivered from the hydraulic pump 461 circulates through the route constituted in the sequence of; the second working oil passage 426, the 2WD-4WD switching magnetic opening-closing valve 443, the first working oil passage 425, and the hydraulic pump 461.

Therefore, even with the constitution employing only one hydraulic motor can provide the same effect as that of the constitution of the fourth embodiment. In this embodiment too, since the pressurizing means 435 is interposed between the suction side of the hydraulic pump 461 and the discharge side of the hydraulic motors 413b, 414b, it is possible to pressurize working oil on the suction side of the hydraulic pump 461 to make cavitation all the more unlikely to occur. Moreover, since the pressurizing means 435 is placed on the low pressure side of the closed circuit (on the downstream side of the hydraulic motors 413b, 414b), the pressurizing means 435 used may be of a relatively low strength against pressure.

Interposing the pressurizing means 435 between the delivery side of the hydraulic pump 461 and the suction side of the hydraulic motors 413b, 414b (on the high pressure side of the closed circuit) makes it possible to pressurize working oil also during the reverse run (when the hydraulic pump 461 rotates reverse). Therefore, there is no need of changing the constitution of the hydraulic circuit when switching between forward and reverse runs. This makes it unnecessary to switch the working oil passages so that the pressuring means 435 is always located on the low pressure side of the closed circuit during both forward and reverse runs. Therefore, a switching valve for switching the working oil passages is unnecessary, and the cost can be reduced.

As shown with the fifth embodiment above, since the left and right front wheels 403 are driven with the single hydraulic pump 461 by employing the constitution in which working oil delivered from the hydraulic pump 461 is distributed with the second spool valve 463 to the two hydraulic motors 413b, 414b, the number and the cost of components are reduced.

This embodiment is shown with a constitution in which no drive force is produced on the front wheels 403 when they are rotating about the same speed as that of the rear wheels 404 in the 4WD state. However, it may also be constituted that, under such a running condition, hydraulic pressure is supplied to the left and right hydraulic motors 413b, 414b to produce very small drive force, smaller than that on the rear wheels 404, on the front wheels 403. With this constitution, when the revolutions of the front and rear wheels 403, 404 are about the same each other, very small drive force is produced on the front wheels 403. The moment the drive force on the rear wheels 404 decreases as when the rear wheels 404 spin, the very small drive force on the front wheels 403 takes effect immediately, and that the drive force increases rapidly to a very high level. That is to say, the front wheel drive force can be produced and increased with good response.

The fourth and fifth embodiments above employ the constitution in which the power of the engine 402 is transmitted through the mechanical power transmitting means to the rear wheels 404. However, the rear wheels 404 can also be driven with hydraulic pressure like the front wheels 403. Employing this constitution makes it possible to omit some of the rear wheel driving components such as the drive shaft, which all the more increases the degree of freedom in vehicle body layout.

### Possible Industrial Application

As described above, this invention can be applied effectively to two-wheeled, three-wheeled, and four-wheeled vehicles of the front and rear wheel drive type, in particular to vehicles that are required to reduce the vehicle body size.

## Claims

1. A front and rear wheel drive type of vehicle **characterized by** comprising; a hydraulic pump driven as interlocked with a rear wheel, a front wheel driving hydraulic motor connected to the hydraulic pump and placed in the vicinity of a front wheel, and a pressurizing means interposed between the front wheel driving hydraulic motor and the hydraulic pump, with the hydraulic pump, the front wheel driving hydraulic motor, and the pressurizing means constituting a closed hydraulic circuit.

2. A front and rear wheel drive type of vehicle of claim 1, **characterized in that** the pressurizing means is interposed between the suction side of the hydraulic pump and the discharge side of the hydraulic motor.

3. A front and rear wheel drive type of vehicle of claim 1, **characterized in that** the pressurizing means is interposed between the delivery side of the hydraulic pump and the suction side of the hydraulic motor.

4. A front and rear wheel drive type of vehicle of claim 1, **characterized in that** the power source of the hydraulic pump is an engine.

5. A front and rear wheel drive type of vehicle of claim 1, **characterized in that** the power source of the hydraulic pump is an electric motor.

6. A front and rear wheel drive type of vehicle of claim 1, **characterized in that** hydraulic pressure is supplied to the hydraulic motor so that the hydraulic motor rotates synchronously with the front wheel in a vehicle running state of the front and rear wheels rotating at about the same speed each other.

7. A front and rear wheel drive type of vehicle of claim 1, **characterized in that** hydraulic pressure is supplied to the hydraulic motor so that drive force smaller than that on the rear wheel is produced on the front wheel in a vehicle running state of the front and rear wheels rotating at about the same speed each other.

8. A front and rear wheel drive type of vehicle of claim 1, **characterized in that** running mode switching means is provided to switch between a vehicle running mode of driving the rear wheel only and a vehicle running mode of driving the front and rear wheels.

9. A front and rear wheel drive type of vehicle of claim 1, **characterized in that** the pressurizing means is formed by installing a bladder made of rubber in a bag shape filled with high pressure gas to a housing that constitutes part of a working oil passage.

10. A front and rear wheel drive type of vehicle of claim 1, **characterized in that** the pressurizing means is constituted with a cylinder in which a high pressure gas chamber and a working oil chamber are defined with a free piston.

11. A front and rear wheel drive type of vehicle of claim 1, **characterized in that** the hydraulic circuit is constituted with; a pump unit having a hydraulic pump, a motor unit having a hydraulic motor, a hydraulic unit having a pressurizing means, an oil filter, and valves, with the oil filter attached to the housing of the hydraulic unit to form a single body, and with the valves attached to at least one of the three units to form a single body.

12. A front and rear wheel drive type of vehicle of claim 9, **characterized in that** the oil filter and the pressurizing means are placed side by side close to and longitudinally parallel to each other in the housing of the hydraulic unit, with a working oil inlet and a working oil outlet provided on the longitudinal end of the housing.

13. A front and rear wheel drive type of vehicle of claim 10, **characterized in that** the working oil inlet and the working oil outlet are disposed on the end side of the oil filter and a relief valve is disposed on the end side of the pressurizing means.

14. A front and rear wheel drive type of vehicle of claim 1, **characterized in that** the front wheel hub is formed in the shape of a bottomed cylinder having a cylindrical portion and a bottom portion so that the hub is formed with a cylindrical recess which is open to one side, the bottom portion is supported for rotation on a wheel shaft through a bearing, a disk-shaped cover for closing the cylindrical recess is secured to the wheel shaft, a hydraulic motor for driving the front wheel is supported with the cover, the output shaft of the hydraulic motor engages through gears with the hub within the cylindrical recess closed with the cover, the outside circumferential portion of the cover is positioned in the boundary portion between the cylindrical portion and the bottom portion, a labyrinth seal is formed between the outside circumferential portion of the cover and the cylindrical portion, and a seal member is interposed in a position between the outside circumferential portion of the cover and the hub and nearer to the bottom portion than the labyrinth seal.

15. A front and rear wheel drive type of vehicle of claim 12, **characterized in that** the gear engagement portion of the hydraulic motor and the hub is located close to the cover-.

16. A front and rear wheel drive type of vehicle of claim 12, **characterized in that** the bearing for supporting the hub is constituted as a double row rolling bearing.

17. A front and rear wheel drive type of vehicle of claim 1, **characterized in that** two, right and left front wheels are provided, each provided with a hydraulic motor for driving each wheel independently.

18. A front and rear wheel drive type of vehicle of claim 15, **characterized in that** a hydraulic pump set comprises a hydraulic pump for driving the hydraulic motor for the left front wheel and a hydraulic pump for driving the hydraulic motor for the right front wheel, and working oil supply passages for supplying working oil from those hydraulic pumps to the respective hydraulic motors are provided independently on right and left sides.

19. A front and rear wheel drive type of vehicle of claim 15, **characterized in that** a single hydraulic pump is employed and a flow rate equally dividing means is interposed in the middle position on the working oil passage for supplying working oil from the hydraulic pump to the hydraulic motors for the right and left front wheels.

20. A front and rear wheel drive type of vehicle of claim 15, **characterized in that** working oil is returned from the hydraulic motors for the right and left front wheels through working oil recovery circuits to the hydraulic pumps, with part of the working oil recovery circuits is made in common for right and left, and with the common part provided with common hydraulic auxiliary devices.

21. A front and rear wheel drive type of vehicle of claim 15, **characterized in that** an opening-closing valve for differential lock is provided for individually operating the hydraulic motors for the right and left front wheels.

22. A front and rear wheel drive type of vehicle of claim 1, **characterized in that** the engine power is transmitted through a mechanical transmitting means to the rear wheel to
